(19) Europäisches Patentamt
European Patent Office
Office européen des brevets

(11) EP 3 183 974 B1

(12) **EUROPEAN PATENT SPECIFICATION**

(45) Date of publication and mention of the grant of the patent:
**01.04.2020 Bulletin 2020/14**

(51) Int Cl.:
***A23D 9/02*** *(2006.01)* ***C11B 3/00*** *(2006.01)*
***C11B 3/12*** *(2006.01)*

(21) Application number: **16202263.6**

(22) Date of filing: **05.12.2016**

(54) **IMPROVED METHOD AND SYSTEM FOR RENDERING ANIMAL FAT**

VERBESSERTES VERFAHREN UND SYSTEM ZUM DARSTELLUNG VON TIERISCHEM FETT

PROCÉDÉ ET SYSTÈME AMÉLIORÉS DE FONTE DE GRAISSE ANIMALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.12.2015 EP 15198133**

(43) Date of publication of application:
**28.06.2017 Bulletin 2017/26**

(73) Proprietors:
- **Honkajoki Oy**
  **38950 Honkajoki (FI)**
- **Foodmine Oy**
  **33230 Tampere (FI)**

(72) Inventors:
- **VALKOSALO, Kari**
  **38950 HONKAJOKI (FI)**
- **LÄHTEENKORVA, Jukka**
  **33230 Tempere (FI)**
- **The other inventors have waived their right to be thus mentioned.**

(74) Representative: **Svingor, Adam**
**Danubia**
**Patent & Law Office LLC**
**POB 198**
**1368 Budapest (HU)**

(56) References cited:
**US-A1- 2005 109 676** **US-A1- 2008 034 646**
**US-A1- 2009 139 137**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 183 974 B1

## Description

### FIELD OF THE INVENTION

The present invention belongs generally to the field of refining animal fats. In particular the present invention provides for a method for processing animal fat, e.g. rendered animal fat by removal of contaminants wherein low nitrogen-content rendered animal fat is prepared preferably by removal of nitrogen compounds selected from a nitrogen containing heterocyclic compounds or volatile nitrogen containing compounds or small cyclic nitrogen compounds from rendered animal fat by extraction. The invention also relates to the use of methanol in the method, the rendered animal fat, soil additives obtained from the nitrogen compounds removed and a system for these operations.

### BACKGROUND ART

Rendering animal fat is a process of both physical and chemical transformation using a variety of equipment and processes. All of the rendering processes involve the application of heat, the extraction of moisture, and the separation of fat. The temperature and length of time of the cooking process are critical and are the primary determinant of the quality of the finished product.

The processes vary according to the raw material composition.

All rendering system technologies include the collection and sanitary transport of raw material to a facility where it is ground into a consistent particle size and conveyed to a cooking vessel, either continuous-flow or batch configuration. Cooking is generally accomplished with steam at temperatures of 115 to 145 °C for 40 to 90 minutes depending upon the type of system and materials. Most of modern rendering systems are continuous-flow units. Regardless of the type of cooking, the melted fat is separated from the protein and bone solids and a large portion of the moisture is removed. Most importantly, cooking inactivates bacteria, viruses, protozoa, and parasites. Fat is separated from the cooked material via a screw press within a closed vessel. Following the cooking and fat separation, the "cracklings" or "crax," which includes protein, minerals, and some residual fat, are then further processed by additional moisture removal and grinding, then transferred for storage or shipment. Storage of the protein is either in feed bin structures or enclosed buildings. The fat is stored and transported in tanks. Meat rendering plants process animal by-product materials for the production of tallow, grease, and high-protein meat and bone meal. Plants that operate in conjunction with animal slaughterhouses or poultry processing plants are called integrated rendering plants. Plants that collect their raw materials from a variety of offsite sources are called independent rendering plants. Independent plants obtain animal by-product materials, including grease, blood, feathers, offal, and entire animal carcasses, from the following sources: butcher shops, supermarkets, restaurants, fast-food chains, poultry processors, slaughterhouses, farms, ranches, feedlots, and animal shelters. The two types of animal rendering processes are edible and inedible rendering. Edible rendering plants process fatty animal tissue into edible fats and proteins. Inedible rendering plants produce inedible tallow and grease, which are used in livestock and poultry feed, soap, and production of fatty-acids.

In Finland some types of animal wastes are processed in rendering plants. These are mainly animal wastes, which treatment is regulated so that those must be rendered. For example animals which die in farms in western and southern Finland must be collected and rendered. At the moment main part of animal fat produced in rendering plants is used as a raw material for biodiesel production. In Finland rendering plants are located in Honkajoki and Kaustinen in western Finland, operators are Honkajoki Oy and Findest Protein Oy.

Rendering plants process or "recycle" animal by-product materials to produce grease, and protein meals. Additionally the technology produce volatile organic compounds (VOCs), which are the primary air pollutants emitted from rendering operations. The major constituents that have been qualitatively identified as potential emissions include organic sulphides, disulphides, C-4 to C-7 aldehydes, trimethylamine, C-4 amines, quinoline, dimethyl pyrazine, other pyrazines, and C-3 to C-6 organic acids. In addition, lesser amounts of C-4 to C-7 alcohols, ketones, aliphatic hydrocarbons, and aromatic compounds are potentially emitted. The improvements in process and process control have had little effect on the properties of odour. This odour is a primary air pollutant emitted from the rendering process. Rendering odours are derived primarily from two areas: the raw material and the cooking/drying process.

Animal fats are attractive feedstock for biodiesel because their cost is substantially lower than the cost of vegetable oil. Animal fat feedstock can be made into high-quality biodiesel if the raw material quality meets the requirements of biodiesel production. The high nitrogen content of fat is a limiting factor of the quality and the determining factor of price. These nitrogen compounds cannot be removed by filtration.

Engines fueled by 100% biodiesel usually have NOx emissions increases of 4 - 13% which presently must be reduced by lowering the ratio of biodiesel in the fuel. One of the mechanism of NOx is NO production from the nitrogen that is contained in the fuel. As most diesel fuels contain very small amounts of nitrogen this aspect may be somewhat neglected over prompt NO production (i.e. NO that is formed by reactions involving hydrocarbons during the actual combustion process) or thermal NO production [BIOdiesel Tech Notes, Tech Notes Newsletter (2005)June 05 2(1) 1-2,

Department of Biological and Agricultural Engineering at the University of Idaho], however, if the share of biodiesel is to be increased the problem must be tackled somehow.

In the biodiesel production the nitrogen compounds remain in the biodiesel and they increase the NOx emission of the cars which is a serious risk of environmental pollution. Therefore both the need of clean environment and the economic considerations (high nitrogen - low price) require a solution for removing of these nitrogen compounds from the fat.

**McCormick RL et al.** [McCormick RL et al. (2001) "Impact of biodiesel source material and chemical structure on emissions of criteria pollutants from a heavy-duty engine" Environmental Science & Technology, 35(9) 1742-7] have tested a group of 7 biodiesels produced from real-world feedstocks and 14 produced from pure fatty acids. The various fuels were tested in a heavy-duty truck engine using the US heavy-duty federal test procedure (transient test). It was found that the molecular structure of biodiesel can have a substantial impact on emissions. NOx emissions increased with increasing fuel density or decreasing fuel cetane number. The increased NOx observed for some fuels was not driven by thermal NO formation. For fully saturated fatty acid chains the NOx emission increased with decreasing chain length for tests using 18, 16, and 12 carbon chain molecules.

The problem of nitrogen compound removal from oils has been addressed most often in case of thermally cracked waste oils or used motor oils. For example in US5855768A **(**EP900837B1**)** extraction from a stream of the thermally cracked used motor oil is described. While it is measured that nitrogen content is lowered but no specific nature of nitrogen compounds is disclosed. In US20050109676A1 removing contaminants containing sulfur and nitrogen from thermally cracked waste oil is described by using solvent extraction with pure methanol is described. Importantly, the process is carried out under 30-55 psi, i.e. 2.07-3.8 bar pressure. The authors definitely teach that that high pressure is important for better productivity (par. [0010] of D1). It is emphasized that contaminants containing sulfur and nitrogen from the thermally cracked distillates may be removed much faster rate at high temperature and pressure in solvent extraction. In all these methodologies features of the starting material, i.e. thermal cracking of waste oils seems to be an important pre-requisite of this method.

Rendered animal fat, however, is a very different source material both as to its chemical and physical properties. Chemically, it comprises a large amount of glycerol esters and only a very low level of carbohydrates; which means that less apolar and more amphoteric molecules are present, influencing solubility of the fat. Moreover, the composition of contaminants originating from animal metabolism, like water soluble proteins and amino acids and conversions in the cadaver, is necessarily different and of high complexity. US20080034646(A1**)** teaches that "use of animal fats ... as a biodiesel fuel has been ... restricted because the biodiesel fuel contains contaminates that prevent their use as commercial acceptable biofuels." (See par. [0006] of D1.) This is inevitably true. It appears that the authors of US20080034646(A1**)** see the possibility of reducing nitrogen and sulphur content of rendered animal fat by reducing protein content of such fats. US20080034646(A1**)** therefore discloses a process for deproteination of fats and oils and refining of triglycerides by a process wherein animal fat is heated and maintained between 90-100°F (32-38°C) wherein the animal fat is typically a solid, the unsaponifiable portion is coagulated by mixing the fat with a first polymer, the coagulated portion is reacted and mixed with a second polymer in the presence of a non-polar solvent to flocculate this unsaponifiable portion and then separating this portion for the reaction vessel to obtain a feedstock for biodiesel fuel. The process is rather complicated and uses several steps. While in this process the protein content may be reduced this is not a process to specifically remove nitrogen containing compounds which, in particular if they are small organic molecules, would not be effected by this process.

It appears that the prior art is silent about the presence and effective removal of small molecule contaminants, including nitrogen containing compounds, in particular nitrogen containing heterocycles from rendered animal waste product. Also it was not clear in the prior art exactly what type of contaminants are to be removed, if a better quality starting material, e.g. for biodiesel or food production is to be achieved. The prior art is also silent about preparing a better starting material for biodiesel thereby.

The present invention is based on the finding that contaminants in rendered animal fat can be effectively reduced by solvent extraction with methanol in a simple and affordable process. Such contaminants include among others nitrogen containing contaminants other than proteins and peptides, in particular nitrogen containing heterocycles and other nitrogen containing compounds, as defined herein. Moreover, the present method proved to be suitable for removal of free fatty acids and phosphorus containing compounds as defined herein.

It is to be noted here that rendered animal fat of biological origin is a material highly different from cracked waste oil, which is of mineral origin.

The present inventors have surprisingly found that by removal of such contaminants deodorization and bleaching are done in parallel in the very same method whereas these type of activities are usually done in several separate processing steps. Surprisingly it has been found that not only nitrogen content but free fatty acid content and phosphorus content can be reduced by the method of the invention.

The process is appropriate to result in a low amount of residual methanol, sufficiently high flash point and no deterioration in any relevant quality parameters.

Moreover, methanol can be re-introduced into the system and the compounds removed find a use in soil fertilization. Therefore an environment-friendly system for animal fat processing is provided.

BRIEF DESCRIPTION OF THE INVENTION

The invention relates to the aspects and embodiments defined hereinbelow and in the appended claims.

Methods

1. A method for processing rendered animal fat wherein low nitrogen-content rendered animal fat is prepared by removal of nitrogen compounds selected from a nitrogen containing heterocyclic compounds or volatile nitrogen containing compounds or small cyclic nitrogen compounds from rendered animal fat by solvent extraction said method comprising the steps of

a) providing rendered animal fat,
b) subjecting the rendered animal fat to solvent extraction by using an extraction solvent having at least 80%(v/v) methanol content, whereby
low nitrogen-content rendered animal fat and an extract is obtained,
c) optionally assessing the removal of the nitrogen compounds from rendered animal fat,
d) optionally separating the extract, preferably the light extract into solvent and extracted material comprising the nitrogen compounds,
e) optionally recycling at least a part of the separated solvent or the light extract obtained in step d) into the solvent extraction,
f) optionally utilizing the extracted material comprising the nitrogen compounds obtained in step d),
g) optionally controlled agitating e.g. stirring of the animal fat and the solvent is applied during extraction. thereby obtaining low nitrogen-content rendered animal fat.

The apparatus in which the solvent extraction is carried out is an extractor.
The heavy extract obtained as the product of the method is the purified fat also called as raffinate.
The "extract" or light extract in step d) is obtained after mixing the rendered animal fat and the solvent and allowing the extraction process to proceed and after separating the light extract and the raffinate.
Preferably the nitrogen compounds are selected from nitrogen containing heterocyclic compounds or volatile nitrogen containing compounds or small cyclic nitrogen compounds.
Preferably, at least the following nitrogen compounds are removed: 2-pyrrolidinone, 2-piperidinone, indole and skatole.
The description also relates to a method for preparing low nitrogen-content rendered animal fat and/or a method for lowering nitrogen content in rendered animal fat, wherein volatile nitrogen compounds are removed from rendered animal fat by solvent extraction, wherein extraction solvent has preferably at least 80%(V/V) methanol content or a methanol content as defined herein.
Preferably the steps under item 1 above are carried out.
Preferably the small cyclic nitrogen compounds are nitrogen containing heterocyclic compounds.
Preferably the nitrogen containing heterocyclic compounds are small cyclic nitrogen compounds.

1.1 The method according to the invention, in particular according to claim 1 wherein the extraction solvent has at least 90% methanol content, or preferably at least 95% or 98% methanol content, or more preferably at least 99% methanol content, or is absolute methanol.
1.2 The method according to the invention, in particular according to claims 1 wherein the solvent comprises, besides methanol another alcohol selected from ethanol and propanol in an at most 10%, 5% or 2% or 1% ratio.
1.3 The method according to the invention, in particular according to claims 1, wherein the temperature in the extractor is not lower than the melting temperature of the animal fat and not higher than the boiling temperature of the solvent.

2. The method according to the invention, in particular according to claims 1 wherein

- the level of nitrogen in the low nitrogen-content rendered animal fat is not higher than 0.025 %(w/w), preferably

not higher than 0.02 %(w/w) or not higher than 0.015 %(w/w); or

- the level of nitrogen compounds selected from nitrogen containing heterocyclic compounds or volatile nitrogen containing compounds or small cyclic nitrogen compounds in the low nitrogen-content rendered animal fat is not higher than 0.025 %(w/w), preferably or not higher than 0.02 %(w/w) or not higher than 0.01 %(w/w) or not higher than 0.05 %(w/w), more preferably not higher than 0.001 %(w/w) or

level of nitrogen compounds is not higher than 30 %, preferably not higher than 20 % or 15 %, more preferably not higher than 10 % or 5% or 2% or 1% of the original amount/level.
In a preferred embodiment free fatty acid content is reduced to less than 10 %(w/w) or less than 8 %(w/w) or less than 6 % in the method or more preferably less than 4 %(w/w) or less than 3 %(w/w) in the process.
In a preferred embodiment phosphorus content is reduced to less than 30 mg/kg or less than 25 mg/kg or more preferably less than 24 mg/kg in the process.
Preferably N content is reduced to less than 200 mg/kg and free fatty acid content is reduced to less than 6 %(w/w), or more preferably N content is reduced to less than 150 mg/kg and free fatty acid content is reduced to less than 5 %(w/w), or highly preferably N content is reduced to less than 110 mg/kg and free fatty acid content is reduced to less than 4 or 3 %(w/w) whereas phosphorus content is reduced to less than 30 mg/kg.
Preferably the low nitrogen-content rendered animal fat is as defined below in the pertinent section.

2.1. Preferably the temperature in the extractor is not lower than the melting temperature of the animal fat and not higher than the boiling temperature of the solvent at the pressure applied in the extractor.
High pressure is not a prerequisite to the present method. In particular the pressure is at most 2 bar or 1 to 2 bar or 1 to 1.5 bar. Preferably the pressure is atmospheric pressure.
As the skilled person will recognize, the applicable temperature range will depend on the solvent's boiling point and thus also depends on the pressure.
The method as disclosed above wherein the temperature of the fat in the extraction steps or the temperature in the extractor is 45 to 85°C, preferably 45 to 75°C or 45 to 65°C. Preferably the temperature is 45 to 65°C, preferably 50 to 60°C, e.g. 50 to 57°C or 53 to 59°C or 53 to 57°C or 54 to 56°C, preferably at atmospheric pressure.
At higher pressure the maximum temperature increases.
In a preferred embodiment the pressure range is 1 to 2 bar and the temperature range is 45 to 85°C or 50 to 85°C, or the pressure range is 1 to 1.5 bar and the temperature range is 45 to 75 °C or 50 to 75 °C.
The above temperature and pressure values are preferably measured at the upper region of the extractor column wherein the light extract outlet is, preferably in the upper half, third or quarter of the column or in the upper container of the column.
In case of high columns pressure may be associated with an increased temperature, e.g. fat temperature preferably not higher than 85° or more preferably than 75°C.
Preferably the process is carried out at atmospheric pressure, i.e. the extractor is not pressure-tight.
2.2. Preferably the R mass ratio is at least 0.5, 0.8 or 1.

Preferably the R ratio is at most 5, 3 or 1, preferably at most 1.
Preferably the R ratio is set to 0.5 to 10, preferably 0.8 to 8.
R is preferably the ratio of the mass of fat and solvent preferably considered as two liquid phases in the extractor.
R is preferably the ratio of heavy phase and of the light phase in the extractor.
Preferably the R ratio is measured in the extractor. Preferably the R ratio is calculated as the mass ratio of the mass of the animal fat fed into the extractor and of the sum of the mass of the solvent fed into the extractor plus the mass of the light extract refluxed into the extractor.
3. The method according to the invention, in particular according to claims 1 or 2 wherein the nitrogen compounds which are removed from the rendered animal fat are small cyclic nitrogen compounds selected from compounds having a 5 membered heterocycle, a 6 membered heterocycle, an 8 membered, a 9 membered or a 10 membered heterocycle, said heterocycle

- comprising at least one nitrogen,
- being aromatic or non-aromatic,
- being substituted or unsubstituted.

4. The method according to the invention, in particular according to claim 3 wherein the small cyclic nitrogen compounds are selected from pyrrolidin compounds, piperidine compounds and indole compounds.

4.1. The method according to the invention, in particular according to claim 4 wherein at least the following nitrogen compounds are removed: pyrrolidin compounds and piperidine compounds.

4.2. The method according according to the invention, in particular to claim 4.1 wherein at least the following nitrogen compounds are removed: Pyrrolidinone compound and piperidinone compound, preferably at least pyrrolidinone and 2-Piperidinone.

4.3. The method according to the invention, in particular according to claim 4.2 wherein at least the following nitrogen compounds are removed: 2-pyrrolidinone, 2-piperidinone, indole and skatole.

5. The method according to any of the previous claims wherein the nitrogen compounds have a distribution ratio K between the rendered animal fat and the extraction solvent of at least 1, preferably at least 1.2, more preferably at least 1.3.

6. The method according to the invention, in particular according to any of the previous claims wherein at least the level of the following nitrogen compounds is reduced: 5 membered heterocycles and 6 membered heterocycle to a level of not higher than 0.01 %(w/w), more preferably not higher than 0.001 %(w/w) in the low nitrogen-content rendered animal fat or

the level of nitrogen compounds is not higher than 30 %, preferably not higher than 20 % or 15 %, more preferably not higher than 10 % or 5% or 2% or 1% of the original amount/level.

6.1 The method according to the invention, in particular according to claim 6 wherein at least the level of the following nitrogen compounds is reduced: pyrrolidin compounds and piperidine compounds.

6.2 The method according to the invention, in particular according to claim 6.1 wherein at least the level of the following nitrogen compounds is reduced: Pyrrolidinone compound and piperidinone compound, preferably at least pyrrolidinone and 2-Piperidinone.

6.3 The method according to the invention, in particular according to any of claims 6 to 6.2 wherein the nitrogen compounds have a distribution ratio K between the rendered animal fat and the extraction solvent of at least 4, preferably at least 4.1, more preferably at least 4.2.

6.4. The method according to the invention, in particular according to claim 6.3 wherein also the level of the following nitrogen compounds is reduced: Indole compound.

6.5. The method according to the invention, in particular according to claim 6.4 wherein also the level of the following nitrogen compounds is reduced: Indole and Skatole.

7. The method according to the invention, in particular according to any of the previous claims wherein in step b)

- temperature during extraction, in particular the temperature of the fat, is maintained between 45 to 65°C, preferably 50 to 60°C, e.g. 50 to 57°C or 53 to 59°C or 53 to 57°C or 54 to 56°C and/or
- temperature and pressure is set to a value so that the rendered animal fat is maintained at a fluid (liquid) state wherein preferably the pressure is about atmospheric pressure.

7.1 The method according to the invention, in particular according to any of the above claims wherein the extraction is

- counter-current extraction or
- Kühni type extraction,
- filled column extractor

or is carried out in an apparatus as defined herein, for example in

- a packed column e.g. random packed column or structured packed column,
- a centrifugal extractor,
- a sieve plate columns or sieve tray columns,
- a rotating disc contactor,
- a reciprocating column.

8. The method according to the invention, in particular according to any of the above claims wherein the ratio of the fat/solvent in the extractor (R ratio) is not higher than 3, 2, 1.5, preferably not higher than 1.2 or 1.1 or about 1.

8.1. The method according to the invention, in particular according to any of the above claims or claim 8 wherein the ratio of the fat/solvent in the extractor (R ratio) is provided by refluxing the solvent into the extractor.

8.2. Preferably emulsion forming is avoided in the method. Preferably emulsion forming is avoided by applying an appropriate R ratio. If required or if desired, the R ratio is lowered to not higher than 1.2 or 1.1 or about 1.

Preferably the R ratio is set by applying reflux of the solvent or light extract.
In an embodiment emulsion forming is avoided by controlling of agitation, e.g. stirring. Preferably emulsion forming is monitored or shown, preferably by optical means e.g. by turbidimetry.
Alternatively, emulsion forming can be shown by calculating the heavy extract and light extract ratio vs. the heavy feed and light feed ratio wherein if the proportion of the heavy extract (or the former ratio) increases it is indicative of an emulsion forming.
Preferably stirring speed is set, if desired lowered, to avoid emulsion forming.
The solvent is a solvent as defined herein.
9. The method according to the invention, in particular according to any of the previous claims or claims 1 wherein the removal of the nitrogen compounds from rendered animal fat is assessed e.g. by measuring the nitrogen content, e.g. in the heavy extract, in the light extract or in the purified animal fat.

9.1 The method according to any of the previous claims wherein in step c)

- the level of nitrogen is assessed in the low nitrogen content rendered animal fat,
- the level of nitrogen is assessed in the extract,
- the level of one or more volatile nitrogen compound is assessed in the low nitrogen content rendered animal fat,
- the level of one or more volatile nitrogen compound is assessed in the extract.

9.2 The method according to any of the previous claims, in particular according to claims 1 or claims 8 wherein

d) the extract is separated into solvent or light extract and the extracted material (or heavy extract) comprising the nitrogen containing compounds, and
e) at least a part of the separated solvent obtained in step d) is recycled into the solvent extraction as an extraction solvent. Preferably in the extractor the R ratio is not higher than 3, 2, 1.5, preferably not higher than 1.2 or 1.1 or 1. Preferably the R ratio is measured in the extractor. Preferably the R ratio is calculated as the mass ratio of the mass of the animal fat fed into the extractor and of the sum of the mass of the solvent fed into the extractor plus the mass of the light extract refluxed into the extractor.

10. The method according to any of the previous claims wherein

d) the extract is separated into solvent and the extracted nitrogen containing compounds, and
e) the extracted material comprising volatile nitrogen containing compounds obtained in step d) are utilized.

Preferably the extract is separated into solvent and the extracted material by distillation. 10.1. The method according to claim 10 wherein in step e)
the extracted material comprising nitrogen containing compounds obtained in step d) is utilized as a compost or soil additive for improving compost material or soil.

10.1.1 The method according to claim 10.1 wherein the extracted material is mixed into soil.
10.1.2 The method according to claim 10.1 wherein the extracted material is mixed into a composted material during composting.

11. The method according to any of the previous claims wherein together with volatile nitrogen compounds further compounds are also removed, said compounds selected from the group consisting of fatty acids, esters of fatty acids, acid amides of fatty acids,
said compounds having a K value of at least that of the volatile nitrogen compounds.

11.1 The method according to claim 11 wherein further compounds are selected from the group consisting of $C_2$ to $C_{13}$ fatty acids, esters or amides thereof, e.g. $C_2$ to $C_6$ methyl esters or $C_2$ to $C_8$ acid amides of fatty acids.
11.2 The method according to claim 11.1 wherein further compounds are selected from the group consisting of $C_2$ to $C_{10}$ fatty acids, esters or amides thereof, e.g. $C_2$ to $C_4$ methyl esters or $C_2$ to $C_6$ acid amides of fatty acids.

Uses

1. Use of methanol in extraction solvent for removal of volatile nitrogen compounds from rendered animal fat by solvent extraction,
wherein low nitrogen-content rendered animal fat is prepared by removal of said volatile nitrogen compounds from rendered animal fat by solvent extraction
wherein the extraction solvent has at least 80% methanol content or a methanol content as defined herein.
1.1 The use according to claim 1 wherein the extraction solvent has a composition as defined in any of method claims e.g. method claims 1 above.
Preferably the temperature in the extractor is not lower than the melting temperature of the animal fat and not higher than the boiling temperature of the solvent or as defined in the method claims above.2. The use of claim 1 for the preparation of a low nitrogen-content rendered animal fat, preferably for a low nitrogen-content rendered animal fat as defined below in the pertinent section. Preferably the low nitrogen-content rendered animal fat has any of the following features:

- the level of nitrogen compounds selected from nitrogen containing heterocyclic compounds or volatile nitrogen containing compounds or small cyclic nitrogen compounds in the low nitrogen-content rendered animal fat is not higher than 0.025 %(w/w), preferably or not higher than 0.02 %(w/w) or not higher than 0.01 %(w/w) or not higher than 0.05 %(w/w), more preferably not higher than 0.001 %(w/w) or

level of nitrogen compounds is not higher than 30 %, preferably not higher than 20 % or 15 %, more preferably not higher than 10 % or 5% or 2% or 1% of the original amount/level.
In a preferred embodiment free fatty acid content is reduced to less than 10 %(w/w) or less than 8 %(w/w) or less than 6 % in the method or more preferably less than 4 %(w/w) or less than 3 %(w/w) in the process.
In a preferred embodiment phosphorus content is reduced to less than 30 mg/kg or less than 25 mg/kg or more preferably less than 24 mg/kg in the process.
Preferably N content is reduced to less than 200 mg/kg and free fatty acid content is reduced to less than 6 %(w/w), or more preferably N content is reduced to less than 150 mg/kg and free fatty acid content is reduced to less than 5 %(w/w), or highly preferably N content is reduced to less than 110 mg/kg and free fatty acid content is reduced to less than 4 or 3 %(w/w) whereas phosphorus content is reduced to less than 30 mg/kg.
3. The use of any of the previous use claims for the preparation of a soil or compost additive wherein
the extract is separated into solvent and the extracted volatile nitrogen containing compounds, and
the extracted material comprising volatile nitrogen containing compounds so obtained is utilized as a compost or soil additive for improving compost material or soil.
4. The use of any of the previous use claims in a method according to any of the method claims (1 to 11).

The use according to any of the above wherein the low nitrogen-content rendered animal fat obtained is converted to biodiesel. The use according to any of the above wherein the low nitrogen-content rendered animal fat obtained is converted to a raw material for food or feed, preferably animal feed.

Products -Low nitrogen-content rendered animal fat

The disclosure also provides a low nitrogen-content rendered animal fat obtainable or obtained by a method according to any of the method claims.
Preferably the low nitrogen-content rendered animal fat has any of the following features:

- the level of nitrogen compounds selected from nitrogen containing heterocyclic compounds or volatile nitrogen containing compounds or small cyclic nitrogen compounds in the low nitrogen-content rendered animal fat is not higher than 0.025 %(w/w), preferably or not higher than 0.02 %(w/w) or not higher than 0.01 %(w/w) or not higher than 0.05 %(w/w), more preferably not higher than 0.001 %(w/w) or

level of nitrogen compounds is not higher than 30 %, preferably not higher than 20 % or 15 %, more preferably not higher than 10 % or 5% or 2% or 1% of the original amount/level.
In a preferred aspect free fatty acid content is reduced to less than 10 %(w/w) or less than 8 %(w/w) or less than 6 % in the method or more preferably less than 4 %(w/w) or less than 3 %(w/w) in the process.
In a preferred aspect phosphorus content is reduced to less than 30 mg/kg or less than 25 mg/kg or more

preferably less than 24 mg/kg in the process.

Preferably N content is reduced to less than 200 mg/kg and free fatty acid content is reduced to less than 6 %(w/w), or more preferably N content is reduced to less than 150 mg/kg and free fatty acid content is reduced to less than 5 %(w/w), or highly preferably N content is reduced to less than 110 mg/kg and free fatty acid content is reduced to less than 4 or 3 %(w/w) whereas phosphorus content is reduced to less than 30 mg/kg.

Preferably in the product the volatile nitrogen compounds which are removed from the rendered animal fat are small cyclic nitrogen compounds selected from compounds having a 5 membered heterocycle, a 6 membered heterocycle, a 9 membered or a 10 membered heterocycle, said heterocycle

- comprising at least one nitrogen,
- being aromatic or non-aromatic,
- being substituted or unsubstituted.

Preferably in the low nitrogen-content rendered animal fat the small cyclic nitrogen compounds are selected from pyrrolidin compounds, piperidine compounds and indole compounds.

Preferably in the low nitrogen-content rendered animal fat at least the following nitrogen compounds are removed: pyrrolidin compounds and piperidine compounds.

Preferably in the low nitrogen-content rendered animal fat at least the following nitrogen compounds are removed: Pyrrolidinone compound and piperidinone compound, preferably at least pyrrolidinone and 2-Piperidinone.

Preferably in the low nitrogen-content rendered animal fat at least the following nitrogen compounds are removed: 2-pyrrolidinone, 2-piperidinone, indole and skatole.

Preferably the volatile nitrogen compounds removed from the rendered animal fat product have a distribution ratio K between the rendered animal fat and the extraction solvent of at least 1, preferably at least 1.2, more preferably at least 1.3.

Preferably at least the level of the following nitrogen compounds is reduced: 5 membered heterocycles and 6 membered heterocycle to a level of not higher than 0.01 %(w/w), more preferably not higher than 0.001 %(w/w) in the low nitrogen-content rendered animal fat, wherein preferably

- at least the level of the following volatile nitrogen compounds is reduced: pyrrolidin compounds and piperidine compounds, and/or
- at least the level of the following volatile nitrogen compounds is reduced: Pyrrolidinone compound and piperidinone compound, preferably at least pyrrolidinone and 2-Piperidinone,

wherein preferably the volatile nitrogen compounds have a distribution ratio K between the rendered animal fat and the extraction solvent of at least 4, preferably at least 4.1, more preferably at least 4.2.

Preferably, also the level of the following volatile nitrogen compounds is reduced: indole compound, more preferably: indole and skatole.

Preferably the low nitrogen comprising purified animal fat comprises a reduced amount of a small fatty acid or small fatty acid derivative compound or amide thereof, e.g. selected from the group consisting of $C_2$ to $C_{13}$ fatty acids, esters and/or amides thereof, $C_2$ to $C_6$ methyl esters and/or $C_2$ to $C_8$ acid amides of fatty acids, more preferably a compound selected from the group of compounds consisting of those in Table 1, preferably butanoic acid (butyric acid) e.g. 3-methyl-butanoic acid, (isovaleric acid), octanoic acid, (caprylic acid), e.g. 2-methyl-octanoic acid, pentanoic acid (valeric acid), e.g. 4-methyl-pentanoic acid or 3-methyl-pentanoic acid, hexanoic acid (caproic acid), benzenepropanoic acid (hydrocinnamic acid) and n-decanoic acid (capric acid) or amids or esters thereof. Preferably the level of any or more than one or all of these compounds is reduced by at least a factor of 2, 3 or 4.

Preferably the low nitrogen comprising purified animal fat comprises a reduced amount of a compound selected from the group consisting of phenol, 4-methyl (para-cresol), maltol and 2-methoxy-4-vinylphenol. Preferably the level of any or more than one or all of these compounds is reduced by at least a factor of 2, 3 or 4.

Preferably the invention relates to a biodiesel prepared from the low nitrogen-content rendered animal fat of the invention.

Preferably the invention relates to a food or feed base material prepared from the low nitrogen-content rendered animal fat of the invention. Preferably the invention relates to a base material for lubricants prepared from the low nitrogen-content rendered animal fat of the invention.

Compost or soil additive

The disclosure also relates to a compost or soil additive obtainable by a method according to the invention, said additive comprising any of the nitrogen compounds as defined above.

Preferably, said additive comprising pyrrolidin compounds and piperidine compounds.

Preferably said additive comprises at least the following nitrogen compounds: Pyrrolidinone compound and piperidinone compound, preferably at least pyrrolidinone and 2-Piperidinone, and preferably also the following nitrogen compounds: indole and skatole.

Preferably the compost or soil additive also comprises compounds selected from the group consisting of fatty acids, esters of fatty acids, acid amides of fatty acids, said compounds having a K value of at least that of the volatile nitrogen compounds, wherein preferably the further compounds are selected from the group consisting of $C_2$ to $C_{13}$ fatty acids, esters and/or amides thereof, e.g. $C_2$ to $C_6$ methyl esters of fatty acids and/or $C_2$ to $C_8$ acid amides of fatty acids.

Apparatus

The disclosure also relates to an apparatus for processing rendered animal fat wherein low nitrogen-content rendered animal fat is prepared by removal of volatile nitrogen compounds from rendered animal fat by solvent extraction, said apparatus comprising

- a counter-current extractor useful for solvent extraction of volatile nitrogen compounds from rendered animal fat by using an extraction solvent having at least 80% methanol content,
- a control unit for controlling the conditions and operating of the counter-current extractor,

wherein said control unit comprises a computer programmed for executing a method according to any of the method claims (1 to 11).

Preferably the apparatus is an extractor wherein temperature and pressure is set to a value so that the rendered animal fat is maintained at a fluid (liquid) state.

Preferably temperature and pressure are set as defined in the methods or in any of the method claims.

Preferably feed and in particular the ration of the animal fat and the solvent and/or the heavy phase and light phase is/are set as defined in the methods or in any of the method claims.

In various aspects the extractor is or comprises a

- a packed column e.g. random packed column or structured packed column,
- a centrifugal extractor,
- a sieve plate columns or sieve tray columns,
- a rotating disc contactor,
- a reciprocating column.

In further embodiments the extractor is or comprises an agitated column, e.g. mixable or pulsed column.

In further embodiments the extractor is or comprises a static column,

Preferably the extractor is

- counter-current extractor or
- Kühni-type extractor.

The disclosure also relates to a system comprising the apparatus of the invention for carrying out the method of the invention and

- a further apparatus, preferably a distillation apparatus, for separation of the extract into solvent and the extracted material comprising the nitrogen containing compounds

wherein preferably
at least a part of the separated solvent separated is recycled into the solvent extraction as an extraction solvent, and means for obtaining extracted material comprising nitrogen containing compounds,
wherein preferably
the extracted material comprising nitrogen containing compounds are utilized preferably a soil additive to prepare an improved compost material or soil.

Preferably the apparatus or the system also comprises a control unit, preferably a computer, having a processor programmed to carry out the method according to the invention and being suitable (or comprising means) to control the apparatus or the system. In a preferred embodiment the control unit, preferably a computer, comprises a data storage unit comprising a computer program, once running, capable of controlling the apparatus or the system so that it may carry out the method if the invention.

DEFINITIONS

A "nitrogen compound" is an organic compound comprising nitrogen. Preferably it is an organic compound selected from acid amides, organic amines, volatile nitrogen compounds, cyclic nitrogen compounds e.g. small cyclic nitrogen compounds. Preferably it is an organic compound readily detectable in its vapor.

A "volatile nitrogen compound" is a nitrogen compound which is easily evaporated at normal e.g. ambient or room temperatures, e.g. it can be easily detected in the vapor or a significant portion thereof is evaporized within a reasonably short time.

A "cyclic compound" is an organic compound comprising a ring formed by carbon atoms and/or heteroatoms, wherein the ring typically comprises 4 to 10, preferably 5 to 8 atoms. A cyclic compound may comprise one or more, typically 1, 2 or 3 rings and optionally substituents.

A "small cyclic compound" is a cyclic compound having 1 or 2 rings and is optionally substituted, however, if substituted the substituents altogether consist of not more than 30, 25 or 22, preferably not more than 20, 15 or 12, more preferably not more than 10, 8 or 6 atoms. Preferably the small cyclic compound is a heterocyclic compound.

A "small cyclic nitrogen compound" is a small cyclic compound comprising nitrogen, preferably comprising a ring nitrogen, more preferably a nitrogen containing heterocycle i.e. it is a nitrogen containing heterocyclic compound.

The term "heterocycle" means a saturated, partly unsaturated or aromatic ring system comprising 1 ring or 2 to 3 conjugated or fused rings and 1 to 5 heteroatoms selected from heteroatoms oxygen, nitrogen or sulphur.

An X membered heterocycle wherein X is an integer, preferably from 5 to 10, relates to the number of atoms forming the heterocycle ring including carbon atoms and heteroatoms as well.

Thus, a 5 or 6 membered heterocycle comprises a single ring formed by 5 or 6 atoms, including carbons and heteroatoms, respectively.

An 8, 9 or 10 membered heterocycle comprises a double ring system formed by 8, 9 or 10 atoms including carbons and heteroatoms, respectively, wherein the fused rings comprise typically two 5 membered, a 5 membered and a 6 membered and two 6 membered rings, respectively.

A "nitrogen containing heterocycle" is a heterocycle comprising at least one nitrogen as a ring-forming heteroatom. Preferably, a nitrogen containing heterocycle comprises pre-eminently nitrogen as heteroatom or more preferably only nitrogen as heteroatom.

A "heterocyclic compound", preferably a "nitrogen containing heterocyclic compound" is a small cyclic compound comprising a heterocycle, preferably a nitrogen containing heterocycle.

"acid amides" as used herein are amides of carboxylic acids, e.g. of fatty acids.

Pyrrolidin compounds, piperidine compounds or indole compound are nitrogen containing heterocyclic compounds comprising pyrrolidin, piperidine or indole, respectively as a heterocycle. Pyrrolidinone compound and piperidinone compounds are pyrrolidin or piperidine compounds comprising pyrrolidinone or piperidinone as a heterocycle.

A "fatty acid" is a carboxylic acid with a long aliphatic tail (chain), which is either saturated or unsaturated. A $C_x$ fatty acids is understood herein as a fatty acid comprising x carbon atoms including the carboxylic carbon atom.

Small fatty acids are understood herein as $C_2$ to $C_{13}$ fatty acids, preferably $C_2$ to $C_8$ fatty acids.

"Animal fat" is a natural hydrophobic substance occurring in animal bodies, preferably mainly in fatty tissue (in particular adipose tissue), especially when deposited as a layer under the skin or around organs, or a hydrophobic substance obtained therefrom, preferably being solid at room temperature, e.g. 25°C.

"Animal" as used herein is a member of the kingdom Animalia, preferably a vertebrate, more preferably a bird or a mammal, in particular a farm animal, highly preferably a mammal. In particular the bird is a poultry, e.g. chicken, duck, goose, turkey etc. In particular the mammal is a livestock or farm animal, preferably kept for meat or fat, e.g. cattle, goat, pig, sheep, horse etc or any other mammal kept or hunted in large quantities like fox, raindeer etc..

"Rendering" is a process that converts waste animal tissue into stable, value-added materials including the processing (rendering) of whole animal fatty tissue into purified fats like lard or tallow. Preferably rendering, as used herein, is carried out on an industrial scale. Preferably, the starting material of rendering includes the fatty tissue, an in particular carcasses of animals. Particular animal sources are bird or mammals, preferably farm animals, preferably livestock and poultry.

"Lard" is a type of rendered fat which contains considerable proportions of palmitic acid, stearic acid, oleic acid and linoleic acid. There are small amounts of palmitoleic acid and traces of linoleic acid, arachidonic acid and myristic acid.

"Tallow": is a type of rendered fat which typically contains 9 or 10 predominant fatty acids, although approximately 180-200 individual fatty acids, mostly in small or trace quantities are also known to be present. It also contains approximately 6% of trans-oleic acid formed by the action of rumen bacteria on vegetable oils.

"Rendered animal fat" is fat obtained by rendering and which is suitable for further use, e.g. for industrial use, preferably for biofuel, preferably biodiesel production.

"Removal" of a certain compound or a certain type or group of compounds from fat is understood as significantly lowering the level or concentration or amount of said compound or type or group of compounds in said fat, e.g. lowering

by at least 40%, 50%, 60%, 70%, 80%, 90%, 95%, 96%, 97%, 98% or at least 99% or lowering to a level of at most 60%, 50%, 40%, 30%, 20%, 10%, 5%, 4%, 3%, 2% or at most 1%.

"Solvent extraction" (Liquid-liquid extraction (LLE)) is a process which comprises transferring one (or more) solute(s) contained in a feed liquid to another immiscible liquid (solvent). The solvent that is enriched in solute(s) is called solvent extract or light extract. The feed liquid (heavy feed) that is depleted in solute(s) is called raffinate (or heavy extract). The method is based on partitioning of the solutes in the phase and is a method to separate compounds based on their relative solubilities in two different immiscible liquids. Thus, it is an extraction of a substance from one liquid into another liquid phase.

The apparatus in which the solvent extraction takes place is the extractor.

In the description, in particular in the Brief Description part the term according to claims 1 e.g. according to method claims 1 means that the feature may be combined with any paragraph numbered as 1 e.g. which defines a method, including those marked as 1.1, 1.2 etc.

The term *"comprise(s)"* or *"comprising"* or "*including*" are to be construed herein as having a non-exhaustive meaning and allow the addition or involvement of further features or method steps or components to anything which comprises the listed features or method steps or components. Such terms can be limited to "*consisting essentially of*" or "*comprising substantially*" which is to be understood as consisting of mandatory features or method steps or components listed in a list, e.g. in a claim, whereas allowing to contain additionally other features or method steps or components which do not materially affect the essential characteristics of the use, method, composition or other subject matter.

BRIEF DESCRIPTION OF THE FIGURES

**Figure 1** - Gas chromatogram of methanol extract of rendered animal fat obtained from Honkayoki Oy measured and analyzed by the GCMS method - most volatile compounds are shown in the first part of the chromatorgram at low retention times.

**Figure 2** - Gas chromatogram of methanol extract of rendered animal fat obtained from Honkayoki Oy measured and analyzed by the GCMS method - second part of the chromatorgram at higher retention times shows mainly fatty acids, fatty acid esters and acid amides.

**Figure 3** - Results of model calculations for concentration in the % of initial fat concentration at various extraction steps for 2-pyrrolidinone, indole and 9-octadecaneamide at a solvent per fat mass ratio R= 0.1.

**Figure 4** - Results of model calculations for concentration in the % of initial fat concentration at various extraction steps for 2-pyrrolidinone, indole and 9-octadecaneamide at R= 1

**Figure 5** - Results of model calculations for concentration in the % of initial fat concentration at various extraction steps for 2-pyrrolidinone, indole and 9-octadecaneamide at R= 10

**Figure 6** - Concentrations of2-pyrrolidinone, indole and 9-octadecaneamide in the percentage of initial concentration in the fat, at various theoretical plate numbers, in a countercurrent extraction at R= 0.1.

**Figure 7** - Concentrations of2-pyrrolidinone, indole and 9-octadecaneamide in the percentage of initial concentration in the fat, at various theoretical plate numbers, in a countercurrent extraction at R= 1.

**Figure 8** - Concentrations of2-pyrrolidinone, indole and 9-octadecaneamide in the percentage of initial concentration in the fat, at various theoretical plate numbers, in a countercurrent extraction at R= 10.

**Figure 9** - Category 2 rendering plant flowsheet showing the process at Honkayoki Oy.

**Figure 10** - A photo of the Sulzer ECR60 extractor applied in the pilot study.

**Figure 11** - A process flow diagram showing a design for an industrial scale technology. The meaning of the numbers are as follows: 1: Fat tank; 2: Methanol tank; 3: Raffinate fat tank; 4: Reflux tank; 5: Storage tank; 10 Extractor; 11: Vakuum evaporator; 12: Evaporator.

DETAILED DESCRIPTION OF THE INVENTION

The present inventors have found that contaminants of rendered animal fat can be effectively reduced by solvent extraction with methanol in a simple and affordable process wherein methanol is applied as a solvent. Thereby also the nitrogen content of the rendered animal fat can be reduced. In the process relatively mild conditions can be applied which results in a cost-effective solution. A surprisingly low number of extraction steps or theoretical plate number is sufficient to remove a large part of nitrogen containing compounds.

The new method developed and tested in laboratory scale for removing of contaminants from fat by methanol extraction. It has been found that the main components which are removed by the process of the invention comprise compounds selected from butyric acid, octanoic acid, 2-methyl, pentanoic acid, pentanoic acid, 4-methyl, phenol, hexanoic acid, pentanoic acid, 3-methyl, phenol, 4-methyl, butanoic acid, 3-methyl, maltol, octanoic acid, 2-methoxy-4-vinylphenol, benzenepropanoic acid, n-decanoic acid, 2-pyrrolidinone, 2-piperidinone, indole, skatole, hexadecanamide, palmitamide and 9-octadecenamide.

Among these compounds the most important nitrogen containing compounds the present inventors detected and which cause the elevated nitrogen content of fat and the unpleasant smell are 2-pyrrolidinone, 2-piperidinone, indole, skatole, hexadecanamide, palmitamide and 9-octadecenamide.

Methanol may have different levels of purity as defined herein. For example the methanol may have at least 90% purity, or preferably at least 95% or 98% purity, or more preferably at least 99% purity, or may be absolute methanol.

Moreover, methanol can be re-introduced into the system. In a preferred embodiment or in an additional step the compounds removed find a use in soil fertilization.

Therefore an environment-friendly system for animal fat processing is provided.

Fats and oils comprise one of the three major classes of foods, the others being carbohydrates and proteins. Chemically, they may be defined as esters of three carbon carboxylic trihydroxy alcohol, glycerol (propan-1,2,3-triol), and various monocarboxylic acids known as fatty acids. Since glycerol is a trihydroxy alcohol, monoacid, diacid and triacid esters are known.

The type of fatty acids connected to the glycerol determine the properties and health effect of fat and oils.

Rendering of animal fat is a well known process several variants of which has been described.

For example, Sharma H. et al. [Sharma H. et al. (2013) Animal fat-Processing and Its Quality Control,

J Food Process Technol 2013, 4:8] provides a review on animal fat rendering. Treatment typically involves a series of purifying steps such as settling and degumming, neutralization, bleaching and lastly deodorization followed by modification into more usable products and finally packaging. The authors describe various analytical methods used for quality control of fat such as estimation of iodine value, peroxide value, saponification value etc.

Animal by-product handling and various requirement regarding animal fat rendering are laid down in standards and regulations the person skilled in the art should duly consider. For example, REGULATION (EC) No 1069/2009 lays down health rules as regards animal by-products and derived products not intended for human consumption and its implementing regulation (COMMISSION REGULATION (EU) No 142/2011).

Requirement regarding Meat Rendering Plants are described in standards like for USA the AP42, fifth edition, January 1995, Office of Air Quality Planning And Standards Office Of Air And Radiation US EPA Research Triangle Park, NC, 27711 US, CH 9.5.3: Meat Rendering Plants; also comprising description of the rendering process.

A typical process comprises collecting animal waste or carcasses in closed (wet-tight) containers. A first version of process steps include comminution (shredding and optionally grinding), heat treatment with buffering and optionally homogenization, drying and finally pressing to obtain fat. In a second version of process steps phase separation also can be used to obtain an additional phase of fat.

Thereafter fat is processed as necessary. The present invention can be considered as a part of fat processing.

A typical Category 2 rendering plant flowsheet showing the process at Honkayoki Oy is shown on Figure 9.

Biofuel production from rendered animal fat is a well known process and has been described in several publications like in the following patents and patent applications: US20130236938(A1), US20090300971(A1), US20080163543(A1), WO2008130974(A2). A good quality feedstock is essential for effective fuel production.

The fat originated from rendering has a characteristic smell, coming from a complicated mixture of compounds.

Initially, the present inventors have determined composition of smell by headspace-SPME-GCMS method. It was found that in this complex mixture of various volatile compounds the unpleasant smell originated pre-eminently from the nitrogen compounds (2-Piperidinone and indole) and the short chain fatty acids like butyric acid.

The inventors after several non-successful attempts have experimented with methanol extraction and analysed the composition of the methanol extract. The chromatograms showed 4 detectable volatile nitrogen compound, the 2-Pyrrolidinone, 2-Piperidinone, Indole and Skatole which could be removed thereby from the fat with a surprising effectiveness. The partition coefficient for these and other compounds vis-à-vis rendered animal fat was determined by the following methodology.

**Method for determination of solubility partition coefficient**

In solvent extraction, a distribution ratio is often quoted as a measure of how well-extracted a species is. The distribution ratio (K) is equal to the concentration of a solute in the second phase divided by its concentration in the first phase. Depending on the system, the distribution ratio can be a function of temperature, the concentration of chemical species in the system, and a large number of other parameters. Often, the distribution coefficient is referred to as partition coefficient.

The initial state in the process is fat having the mass $m_1$, wherein the concentration of a component is $c_0$.

After the first extraction step with methanol, in Phase 2 (solvent), having the mass of $m_2$, the equilibrium concentration of a component said component is $c_2$, whereas in Phase 1 (fat), having an essentially unchanged mass of $m_1$, the concentration of the equilibrium component of the component is $c_1$.

The equilibrium ratio of $c_2$ and $c_1$ gives the partition coefficient K.

If we make a repeated extraction step with the solvent (in our example methanol) in Phase 4 the equilibrium concentration of a component said component is $c_4$, whereas in Phase 3 (fat), having still an essentially unchanged mass of $m_1$, the concentration of the equilibrium component of the component is $c_3$.

As the distribution ratio is evidently the same,

$$K = \frac{c_2}{c_1} = \frac{c_4}{c_3} \quad (1)$$

The repeated extraction will give more and more pure fat: $c_0 > c_1 > c_3 > ...$

The efficiency of extraction depends on the number of extraction steps and the K value which is different for every compound. The K value can be calculated if we measure the concentration of the component after the first and second extraction in the methanol.

We can describe the mass balance with the following equations, assuming that the mass of the fat remains constant:

$$c_1 m_1 + c_2 m_2 = c_0 m_1 \quad (2)$$

$$c_3 m_1 + c_4 m_2 = c_1 m_1 \quad (3)$$

where $c_0$ is the initial concentration, $c_2$ and $c_4$ are the equilibrium concentration in the solvent (methanol) in the first and second extraction, $c_1$ and $c_3$ are the equilibrium concentration in the fat. The mass of the fat is $m_1$ (provided that it can be considered as unchanged after each extraction step), $m_2$ is the mass of added methanol (preferably it is the same in every extraction step).

The mass ratio of the two liquid phases (fat and solvent) can be calculated:

$$R = \frac{m_2}{m_1} \quad (4)$$

If equation (3) is divided with $m_1$ and we consider the meaning of equation (4):

$$c_3 + c_4 R = c_1 \quad (5)$$

If equation (5) is divided with $c_4$ and we consider equation (1) we get:

$$\frac{1}{K} + R = \frac{c_1}{c_4} \quad (6)$$

By using the equation (1) the $c_1$ can be expressed:

$$c_1 = \frac{c_2}{K} \quad (7)$$

By combining the equations (6) and (7) we get:

$$\frac{1}{K} + R = \frac{c_2}{K c_4} \quad (8)$$

If equation (8) is multiplied with K, we get:

$$1+RK=\frac{c_2}{c_4} \quad (9)$$

From the equation (9) the value of K can be calculated:

$$K=\frac{\frac{c_2}{c_4}-1}{R} \quad (10)$$

The $c_2/c_4$ ratio can be calculated from the measurement results, whereas R is the ratio of the mass of fat and solvent therefore we can calculate the partition coefficient (K) for every component from their equilibrium concentration in the solvent in two consecutive extraction steps (expediently the first two steps.

We have surprisingly found that methanol is a solvent which is a most promising choice for a liquid-liquid extraction.

For evaluation of the method first we determined the dissolved compounds in the methanol phase. After this a method was developed for the determination of the solubility equilibrium constants from the concentration data of the methanol phase.

Having this, from the measurement of the concentration of different compounds from a repeated extraction the partition coefficient ($K_c$) can be calculated. The K values are good parameters for the calculation of concentrations in the final products. The comparison of K values for different compounds the efficiency of removal from the fat of the components can be estimated.

For the further technological calculations we determined the amount of total removed material from the fat. The further usage of this nitrogen-rich malodorous material obtained from the methanol extract was tested as well.

## Mass balance and use of by-products

The fate of methanol solution which contains the impurities is a very important question. The methanol can be removed by distillation and it can be recycled to the technology. The loss of methanol in the process can be estimated only from a pilot study.

After the distillation the dark brown residue will contain fat, but it is mainly free fatty acids and nitrogen compounds. It will have a strong, characteristic odour. This material is, nevertheless, a valuable source of nitrogen in agricultural application and can be used as a soil fertilizer, e.g. as a component of bio-compost.

The mass of contaminated residue after the methanol distillation is between 3-10 % of the original fat. Therefore significant amount of nitrogen rich material will be produced. Its amount can be decreased and the nitrogen concentration can be increased in it by applying lower extraction temperature (20-40 °C), because the fat content will be smaller in the methanol at lower temperatures. At lower temperature the fat is more solid, so the extraction unit should be chosen according to this.

Thus, lowering the temperature is an advantage in the present method whereas the solid fat is more difficult to handle in extraction.

The high fat and nitrogen containing residue was mixed with dried soil. According to our experience the volatile compounds well adsorb and degrade in the soil and we obtained an odour free compost material. This compost can be used as an organic fertilizer, but it require further testing in agricultural experiment. Applying all these steps together results in complex method without any harmful waste product.

## Conclusions

Extraction of fat with methanol is an applicable technology for decreasing nitrogen content by decreasing nitrogen containing heterocycles, preferably nitrogen containing heterocyclic compounds or volatile nitrogen containing compounds or small cyclic nitrogen compounds or small nitrogen containing heterocycles, and free fatty acid content of fat from animal waste rendering technology. Also a number of other contaminants are removed e.g. as listed in Table 1 or defined in the Brief Description part of the invention. Nitrogen content is decreased by this method via decreasing small nitrogen containing organic molecules e.g. nitrogen containing heterocycles as disclosed herein. The concentration of nitrogen compounds can be decreased to the level required by biodiesel production. The purified fat has lighter colour,

much less odour and it is a much more valuable raw material for the biodiesel production. Moreover the resulting rendered purified fat can be used for other purposes like feed or food base material or as a base material for lubricants.

The technology require methanol, but the methanol can be recycled in the technology.

The extract and raffinate contained methanol, but in can be removes by evaporation or distillation and decreased to the required level.

Products of the technology:

1. Purified fat. After removing the methanol from the raffinate the mass of the material will be 85-90% of the original material.
2. Contaminants are dissolved in fat. 10-15% of the mass of starting fat. This can be utilized in soil or compost systems.
3. Headproduct of methanol distillation: They are the most volatile compounds.

The fat can be pure enough. Good quality of fat can be produced, higher price can be achieved. The concentrated contaminants gives further opportunities to produce more valuable product. For example we can produce fertilizer from this product.

**Use of by-product**

The by-product of process is the "brown fat". It contains 2-Pyrrolidinone, 2-Piperidinone, Indole, Skatole and optionally Hexadecanamide and optionally 9-Octadecenamide and may comprise some other nitrogen conatining compounds as well as free fatty acids. The brown fat can be used as a soil fertilizer.

The strong odour of the "brown fat" can be decreased by mixing it with dried chernozem soil resulting in a nitrogen rich compost material. This compost can be used as bio compost.

**Methodology**

The above results of purification have been achieved in a laboratory scale. The scale-up of technology requires a pilot study. In this we have to use the miniature industrial equipment. The efficiency of extractors and the distillation of the methanol extract can be tested as well. The determination of mass balances to be applied could be more precisely made pilot study.

Several example for the pilot study are given in the Examples.

In 1949, Lyman Craig [Craig, L. C. J. Biol. Chem. (1944) 155, 519-534] introduced a method for separating analytes with similar distribution ratios. The technique became known as a countercurrent liquid-liquid extraction. The technique uses a serial extraction of both the sample and the extracting phases. Both extraction and chromatographic techniques have developed since then but the theory behind a counter-current extraction is still valid and useful as an introduction to the theory of modern methods.

Counter-current methods for separation of natural products including counter-current extraction methods for fats are in general well known in the prior art. However, these methods are used pre-eminently for separation of fat compontents e.g. isolation of fatty acids or separation of fats.

For example Birch EJ [Birch EJ "Extraction by Solvent Based Methods" describes solvent extraction of fats and oils as a production method used to recover a component from either a solid or liquid, e.g. as an alternative of other methodologies like batch-processing presses or continuous screw presses.

In a recent article Friesen JB et al. [Friesen JB et al. (2015) "Countercurrent Separation of Natural Products: An Update" J. Nat. Prod. 2015, 78, 1765-1796] provides a critical review on current instrumentation, method development, and applications in counter-current chromatography (CCC) and centrifugal partition chromatography (CPC), collectively referred to as countercurrent separation (CCS). The article reviews the current state of CCS in regard to instrumentation, solvent system, development, theory, optimization of parameters, workflow and bioactivity applications. In principle some or several of these technologies once it is feasible as a preparative separation method may be applied in the present invention.

A preferred example is Kühni type extractor also mentioned in said paper by Friesen JB et al.

A few further examples is given below for various types of extraction methods.

According to a division of available technology the following groups of liquid liquid contacting can be differentiated depending, among others, the difficulty of the thermal separation in terms of required number of theoretical stages (NTS) to reach the desired raffinate and extract concentrations:
centrifugal extractors for difficult phase separation and relatively low NTS; agitated columns with reciprocating, rotating or pulsating equipments for moderate phase separation requirements and higher NTS; static columns for easy phase separation with low NTS; mixer-settler batteries for a high requirement of NTS at easy phase separating conditions [Rauber J. Design Practice for Packed Liquid Liquid Extraction Columns 2006 AIChE Annual Meeting San Francisco,

CA, USA].

While in the present solution agitated columns may have an advantage in controlling emulsion forming; packed columns may have the advantage of high specific throughput capacity and easy operation and maintenance because no moving parts are involved. Thus, if conditions and raw materials do not vary, standard and precisely designed procedure may be designed for packed columns as well [Rauber J. 2006 infra]. While there are software today to design industrial methods, pilot experiments are still necessary for optimal working.

The key benefit of the packed column for liquid-liquid extraction is the high throughput, which results in small column diameters. Packed column extractors have two basic types: random packed extractors and structured packed extractors. In chemistry structured packing provides usually a better result; such colums are available e.g. from Sulzer with appropriate technical descriptions (see below).

Sieve plate columns or sieve tray columns may have high capacity and good efficiency due to minimum backmixing, however, multiple interfaces can be a problem and may not be effective for high interfacial tension applications.

Pulsed variants of both packed and sieve plate columns may provide better performances.

In general, agitated columns may worth consideration despite more expensive design due to an additional means of control.

Among agitated colums centrifugal extractors, which provide countercurrent flow via centrifugal force, provide low residence time and a good handling of low density difference between phases, however, the method is susceptible to fouling and plugging due to small clearances which may be not advantageous here.

RDC (Rotating Disc Contactor) extractors, while axial backmixing may be a problem, and high shear mixing makes them sensitive to emulsion forming, are suitable for viscous and fouling material. The somewhat similar SCHEIBEL® Columns are not recommended for highly fouling systems or systems that tend to emulsify.

In this regard reciprocating columns, e.g. KARR® Reciprocating Column may be a kind of preferred option with their high performance even at high capacity, good efficiency and controllable uniform shear mixing which may make them adaptable to systems which emulsify.

Extraction systems are also available at Koch Modular Process Systems LLC. (KPMS, Paramus, New Jersey, USA).

The Kühni type column turned out to be quite suitable for pilot scale experiments.

**Suggested equipment for the pilot technology**

For the extraction a Pod extractor could be good, efficient and require small place and it has small scale version too. The producer has a test laboratory, probably there is a chance to make the experiments there and there is a chance for renting the small equipment.

The address of supplier:

**Saginaw,** Michigan, USA
Headquarters, Manufacturing, Technology Centre
1000 Hess Avenue, Saginaw, MI 48601. USA (http://www.bpprocess.com/pods.html).

Equipment:

Other possibility to a Kühni type extractor from Sulzer company (Winterthur, Switzerland) which has service in Finland:

**Sulzer Pumps Finland OY**
Address: Pajatie 75 PO Box 66 48601 Kotka, Finland (http://www.sulzer.com).
Theory and practical guidance to use such type of extraction is available from Sulzer.
Sulzer can supply the distillation unit as well.
Below the invention is further illustrated by non-limiting examples.

EXAMPLES

EXAMPLE 1

We determined the composition of smell by headspace-SPME-GCMS method.

The chromatogram comprised several peeks each representing a component in the smell. Thus, the GCMS method gave us an opportunity to identify the most important components shown in Table 1 below with the retention times. It was found that the unpleasant smell originated from the nitrogen compounds (2-Piperidinone and indole) and

the short chain fatty acids like butyric acid.

**Table 1** Most important components of the smell of rendered animal fat obtained from Honkayoki Oy.

| retention time (min) | name of the compound | chemical structure |
|---|---|---|
| 2.96 | Butanoic acid (Butyric acid) | 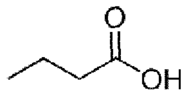 |
| 3.76 | Octanoic acid, 2-methyl | 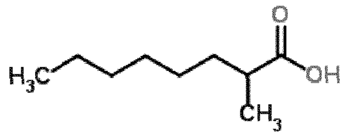 |
| 4.09 | Pentanoic acid (Valeric acid) | 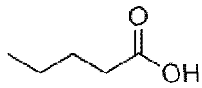 |
| 4.88 | Pentanoic acid, 4-methyl | 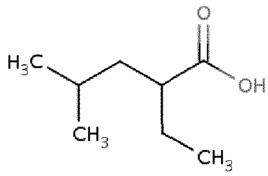 |
| 5.15 | Phenol | 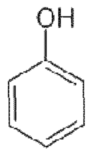 |
| 5.22 | Hexanoic acid (caproic acid) | 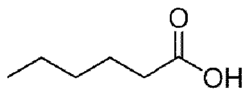 |
| 5.40 | Pentanoic acid, 3-methyl | 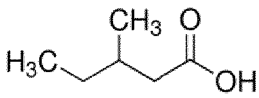 |
| 6.10 | Phenol, 4-methyl (Para-Cresol) | 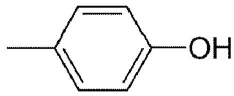 |
| 6.28 | Butanoic acid, 3-methyl (isovaleric acid) | 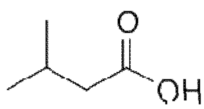 |
| 6.48 | Maltol | 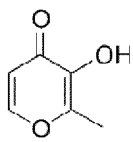 |
| 7.04 | Octanoic Acid (Caprylic acid) | 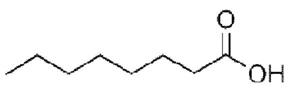 |
| 7.17 | 2-Piperidinone | 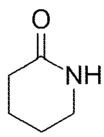 |

(continued)

| retention time (min) | name of the compound | chemical structure |
|---|---|---|
| 8.21 | Indole | 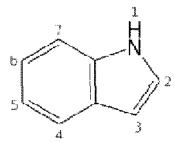 |
| 8.37 | 2-Methoxy-4-vinylphenol | 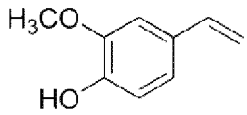 |
| 8.51 | Benzenepropanoic acid (hydrocinnamic acid) | 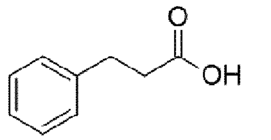 |
| 8.81 | n-Decanoic acid (capric acid) | 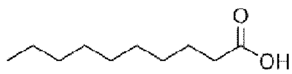 |

**Measurement result of the methanol extracts**

100 ml fat was mixed with 100 ml methanol. The mixture was stored on 60 °C in a closed glass container for 30 minutes. The container was shaked in every 5 minutes. The upper phase was the methanol. The phases were separated and the remaining fat was mixed with 100 ml pure methanol. It was the second extraction, the second equilibrium. The measured concentrations were indicated for the individual components $C_2$ and $C_4$.

The volatile compounds in the methanol extracts was measured again by GCMS method by direct injection of 2 μl sample of two consecutive extractions (Figure 1). It has been found that the first part of the chromatograms showed 4 detectable volatile nitrogen compound, the 2-Pyrrolidinone, 2-Piperidinone, Indole and Skatole as shown below:

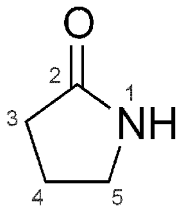
2-Pyrrolidinone

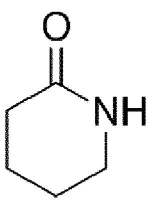
2-Piperidinone

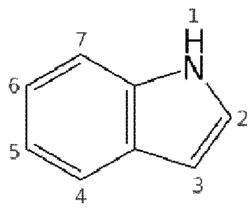
Indole

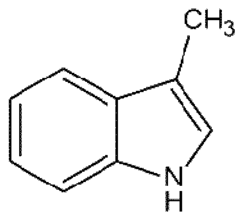
Skatole

It has been found that each of these nitrogen compounds shows very good solubility and extractability in the methanol, because in the second extraction (light grey (originally red) line on the chromatogram) they have a very low concentration comparing the first extraction (black line on the chromatogram).

The methanol extract also contains fatty acids, some methyl ester of fatty acids and acid amides which are detectable at higher retention time (see Figure 2).

Examples for long chain acid amides which are the other type of nitrogen compounds in the rendered fat are as follows:

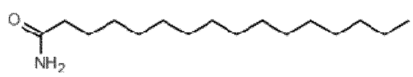
Hexadecanamide (Palmitamide)

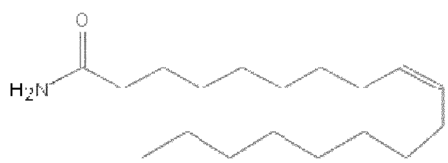
9-Octadecenamide (Oleamide)

The removal of acid amides by methanol extraction requires significantly more extraction steps than that of the small cyclic nitrogen compounds.

EXAMPLE 2

**Calculation of partition coefficient (K) values for individual compounds**

In these experiments, 100 ml fat was mixed with 100 ml methanol at 60°C. Thus, the R values in the experiments were set to 1.

The K values calculated from the $c_2/c_4$ ratios with the equation (10) were found to be the following for the different compounds as shown in Table 2:

**Table 2** - K values of compounds in the methanol extract

| N content in the compound (%) | **Nitrogen compounds** | K value |
|---|---|---|
| 16.7 | 2-Pyrrolidinone | 8.30 |
| 14.1 | 2-Piperidinone | 4.32 |
| 12.0 | Indole | 1.70 |
| 10.7 | Skatole | 1.40 |
| 5.5 | Hexadecanamide | 0.45 |
| 4.9 | 9-Octadecenamide | 0.42 |
| | | |
| C atom number | **Fatty acids** | K value |
| 6 | Hexanoic acid | 2.98 |
| 8 | Octanoic acid | 2.06 |
| 10 | Decanoic acid | 1.98 |
| 12 | Dodecanoic acid | 2.13 |
| 14 | Tetradecanoic acid | 0.98 |
| 16 | Hexadecenoic acid | 0.54 |
| 18 | Octadecenoic acid | 0.43 |

In a consecutive extraction steps if we know the theoretical plate number which is the number of ideal extraction steps (N), knowing the K values and the mass ratio of fat and methanol the final concentration of any compounds in the fat can be calculated:

$$c_N = c_0\left(\frac{K^{-1}}{K^{-1}+R}\right)^N \qquad (11)$$

In the equation (11) $c_N$ means the concentration of the compound in the fat after the "N" consecutive extraction with pure methanol. Once we have calculated the K values, we have made model calculations for 3 different nitrogen compounds, at different methanol/fat ratios by using equation (11). The results are shown of Figures 3 (R=0,1), 4 (R=1) and 5 (R=10).

EXAMPLE 3

Preparations and considerations for countercurrent extraction experiments.

In the practice we use countercurrent extraction. If we make the calculations according to this model knowing the K values and the number of theoretical plate the ideal ratio of methanol/fat can be determined.

The plate number value depends on the technology, machine, flow rates and it must be determined in a pilot experiment. The producer of the machine generally provides a guidance in this regard.

We have calculated concentrations of the same compounds as in example 2, in the percentage of initial concentration in the fat, at various theoretical plate numbers, in a countercurrent extraction.

The results are shown on Figures 6 (R=0,1), 7 (R=1) and 7 (R=10).

Often the ternary diagrams are used for the calculations of the concentration of different compound in the liquid-liquid extractions.

In the case of proper equipment the nitrogen compounds can be removed by the methanol extraction. The more volatile compounds can be removed more easily than the larger molecules specially the acid amides.

EXAMPLE 4

In this example a pilot study for counter-current extraction is shown.

The main objective of the pilot study was two determine parameters for a full scale project.

The main questions to be answered were:

1. What is the effect of the temperature on extraction, what are the preferred temparatures and flow rates?
2. What is the efficiency of extraction?
3. What is the mass balance at different settings?
4. What is the effect of the methanol/ fat ratio on extraction?
5. What is the effect of stirring rate?
6. Is it necessary to recovery of fat from methanol extract with cooling?
7. How could be recovered of nitrogen compounds from methanol extract?
8. How could be removed the methanol residues from the raffinate?

In at least a part of the experiments a Kuhni type ECR60 Sulzer pilot extractor is applied. This extractor is characterized by, relative to its compact size, a high number of agitated compartments per standard column section, broadly variable agitation speed.

Materials of Construction

Column shell: Glass
Internals: Stainless Steel, Titanium, Hastelly alloy, Zirconium, Polypropylene, PVDF
The extractor parameters are as follows:

**Further Design Details**

**Column size ECR60**

| | |
|---|---|
| Number of agitated compartments per standard column section: | 10 |
| Height of column section [mm]: | 350 |
| Diameter of settlers [mm]: | 100 |
| Height of upper settler [mm]: | 255 |
| Height of lower settler [mm]: | 220 |
| Height of drive unit [mm]: | 440 |
| Agitation speed, manually adjustable [rpm]: | 80-800 |
| Maximum throughput of both phases [1/h] (dependent on the free open area $\alpha$) | 8-65 |
| Motor power [Watt] | 90 |
| Motors | 3 x 380 V, 50 Hz, EEx-eII-T3, IP54 |

In an experiment, the extractor is separated to 5 units (compartments or zones) see the following scheme:

Extractor

(continued)

| |
|---|
| Extraction unit 5 |
| Extraction unit 4 |
| Extraction unit 3 |
| Extraction unit 2 |
| Extraction unit 1 |

In the first experiment the fat inlet site is varied to experiment with fat recovery. In the cases wherein one or two upper zones are maintained at lower temperatures fat may be recovered from the methanol simply by this cooling whereas methanol lead away at the upper part of the extractor.

Otherwise extraction temperature is set to 55°C to maintain fat fluidity whereas avoid problems with higher temperature.

In these experiments there is no methyl-ester production and saponification. Evidently the medium is not alkaline.

By assembling standard column sections and selecting perforated plates with a free area ($\alpha$) of 5 - 50% (depending on throughput and number of theoretical stages required) it is possible to configure a test column with the apt design for individual extraction problems.

The experimental design of the fat extraction is shown in Table 3 below.

**Table 3** - Design of pilot experiment

| No. | Fat volume flow rate [L/h] | methanol volume flow rate [L/h] | Temp. [°C] | Mixer rotation [rpm] | Temp. of extractor elements [°C] | Fat inlet site | fat recovery by methanol cooling |
|---|---|---|---|---|---|---|---|
| 1 | 15 | 15 | 55 | 20-40 | 1-5. 55°C; | Unit 5 | yes |
| 2 | 30 | 10 | 55 | 20-40 | 1-5. 55°C; | Unit 5 | yes |
| 3 | 45 | 5 | 55 | 20-40 | 1-5. 55°C; | Unit 5 | yes |
| 4 | 30 | 10 | 55 | 20-40 | 1-3. 55°C;<br>4. 0 °C;<br>5. -20 °C | Unit 2 | no |
| 5 | 30 | 10 | 55 | 20-40 | 1-4. 55°C;<br>5. 0°C | Unit 3 | no |
| 6 | 45 | 5 | 55 | 20-40 | 1-4. 55°C;<br>5. 0°C | Unit 3 | no |

EXAMPLE 5

In this pilot experiment results of initial pilot experiment described in Example 4 was used.

The applied unit was the ECR 60 Kuhni column, which has the parameters as given in Example 4. Each unit temperature regulated with controlled temperature water.

The applied setting consisted 5 pieces of ECR 60 unit and an upper and lower containers.

| | | |
|---|---|---|
| Extractor | | |
| Mixer motor | | |
| Upper container (separator) | → Methanol extract | Removing of light phase (light extract) |
| Extraction unit 5 | | |
| Extraction unit 4 | ← Fat (heavy feed) | Introduction of heavy phase (heavy feed) |

(continued)

| | | |
|---|---|---|
| Extraction unit 3 | | |
| Extraction unit 2 | | |
| Extraction unit 1 | | |
| Lower container separator | ← Methanol (pure) *Phase border* | Introduction of solvent (light feed) |
| | → Purified fat | Removing of raffinate (heavy extract) |

The fat was introduced to the 4th unit and was mixed with the upcoming phase. The density of methanol is 0.77-0.79 g/$cm^3$, the fat density is 0.85-0.87 g/$cm^3$. The raffinate collects on the bottom of column, the extract collects on the top. The phase border is at the lower container, the methanol is the continuous phase.

<u>Starting of the extraction:</u>

In experiments 1 to 10 (EXP1-EXP10) below the column was filled with methanol, the temperature of methanol introduced into the column was of room temperature.

The fat applied herein was fox fat which has a relatively low melting point and a tendency for emulsion forming.

The fat temperature must provide that the fat is in a melted state. Here the fat should be at least 50°C and maximum 60°C. On 40°C the fat partially melted only, it had a solid and a liquid fraction. For making the method for the most robust we decided to melt all of the fat and making the test with the whole fat instead of fractions.

In this set of examples the fat was introduced to the column to the 4th unit. It gave us a chance to try to set different temperature on the 5th unit to see its effect.

The rate of stirring can be controlled at the driving motor.

The experimental design of the fat extraction is shown in Table 4 below.

**Table 4** – Design of pilot experiment

| | RPM | | Heavy | LIGHT | Heavy | Light |
|---|---|---|---|---|---|---|
| | | | FEED | FEED | OUTPUT | OUTPUT |
| | | Fat/MeOH | FAT | MeOH | RAFF | EXTR |
| | | ratio | [kg/h] | [kg/h] | [kg/h] | [kg/h] |
| **EXP1.** | 103 | 0,93 | 7,94 | 8,56 | 7,46 | 9,00 |
| **EXP2.** | 103 | 3,30 | 15,86 | 4,80 | 4,61 | 16,09 |
| **EXP3.** | 102 | 1,11 | 9,75 | 8,79 | 8,76 | 9,84 |
| **EXP4.** | 103 | 1,10 | 9,93 | 9,00 | 8,23 | 10,37 |
| **EXP5.** | 103 | 1,11 | 11,49 | 10,33 | 10,16 | 11,44 |
| **EXP6.** | 103 | 1,13 | 10,08 | 8,94 | 9,06 | 8,53 |
| **EXP7.** | 103 | 1,14 | 10,25 | 9,00 | 9,39 | 10,97 |
| **EXP8.** | 103 | 3,43 (r2) | 10,28 | 3,00 | 4,20 | 9,08 |
| **EXP9.** | 73 | 1,73 (r0.5) | 10,24 | 5,91 | 10,29 | 5,66 |
| **EXP10.** | 73 | 3,39 (r2) | 10,00 | 2,95 | 8,05 | 3,85 |

| | Temperature | | [°C] | | | | |
|---|---|---|---|---|---|---|---|
| | **Fat** | | | | | | **ME-OH** |
| | | Unit5. | Unit4. | Unit3. | Unit2. | Unit1. | |
| | **CH1** | CH2 | CH3 | CH4 | CH5 | CH6 | **CH7** |
| **EXP1.** | **61,9** | 52,8 | 53,5 | 53,7 | 53,2 | 46,5 | **22,2** |
| **EXP2.** | **55,0** | 52,4 | 53,6 | 54,4 | 54,5 | 50,7 | **21,3** |
| **EXP3.** | **53,4** | 42,2 | 41,2 | 40,5 | 40,5 | 36,7 | **23,0** |
| **EXP4.** | **54,9** | 36,8 | 34,8 | 32,6 | 32,1 | 29,4 | **21,6** |
| **EXP5.** | **51,1** | 47,4 | 47,0 | 47,4 | 47,1 | 42,2 | **21,5** |
| **EXP6.** | **53,2** | 47,7 | 47,3 | 47,3 | 47,1 | 42,2 | **22,7** |
| **EXP7.** | **56,4** | 47,5 | 47,9 | 47,4 | 47,2 | 42,7 | **21,6** |
| **EXP8.** | **56,4** | 47,1 | 45,9 | 44,5 | 47,4 | 46,1 | **22,8** |
| **EXP9.** | **52,3** | 47,4 | 46,2 | 45,5 | 47,4 | 45,3 | **22,9** |
| **EXP10.** | **56,2** | 47,8 | 46,8 | 45,2 | 47,6 | 46,9 | **23,3** |

(r): Reflux was applied (reflux ratio was the double (r2) of the amount of the introduced methanol amount in EXP8 and in EXP10, and the half thereof (r0.5) in the EXP 9.

The temperature:

The temperature Exp1-2. was set to 50-53°C for every unit. In the EXP4 lower column temperature (30-36°C) was tested. The rest of the experiments EXP3. and EXP5-10. 47-48 °C was applied.

Fat, Extract and raffinate samples were collected from every experiment and analysed.

Methanol free raffinate sample was prepared and given to Honkajoki. 7-10 kg of extract and raffinate from the EXP6 was used further purification and testing.

The ratio of fat/methanol:

The fat/methanol ratio was set to a 1 to 1 ratio in the EXP1 and EXP 3-7. The ratio was changed to 3 to 1 in the EXP2.

In EXP 8-10 reflux was applied: from the Unit 5 the mixture of liquids were introduced to the Unit 3. The reflux amount was the double of the amount of the introduced methanol amount in EXP8 and in EXP10, and the half in the EXP 9. These settings are shown in more detail in Table 5.

**Table 5** Fat/methanol feed ratios, pump parameters and recycling in EXP1-10 (see also Table 4)

| | | Heavy | LIGHT | Setpoint | | recycling |
|---|---|---|---|---|---|---|
| | | **FEED** | **FEED** | **pumps** | | **reflux** |
| | *Fat/MeOH* | FAT | MeOH | | | |
| | *ratio* | [kg/h] | [kg/h] | Heavy | Light | |
| **EXP 1.** | *0,93* | 7,94 | 8,56 | 10 | 170 | |
| **EXP 2.** | *3,30* | 15,86 | 4,80 | 15 | 90 | |
| **EXP 3.** | *1,11* | 9,75 | 8,79 | 10 | 170 | |
| **EXP 4.** | *1,10* | 9,93 | 9,00 | 10 | 170 | |
| **EXP 5.** | *1,11* | 11,49 | 10,33 | 10 | 170 | |
| **EXP 6.** | *1,13* | 10,08 | 8,94 | 10 | 170 | |
| **EXP 7.** | *1,14* | 10,25 | 9,00 | 10 | 170 | |
| **EXP 8.** | *3,43* | 10,28 | 3,00 | 10 | 57 | 113 |
| **EXP 9.** | *1,73* | 10,24 | 5,91 | 10 | 113 | 57 |
| **EXP 10.** | *3,39* | 10,00 | 2,95 | 10 | 57 | 113 |

The methanol content of the raffinate and the fat content of extracts were determined after vacuum distillation with a rotadest equipment. The initial mass and the mass of residue was measured as well.

Rate of purification in Exp 1

Nitrogen levels in the samples from the EXP1 (No4. and No14.) were measured. The initial concentration of the fat was 900 mg/kg (0,09%(w/w)), the purified fat (No14.) concentration was 250 mg/kg nitrogen (0.025%(w/w)). The result indicates the efficiency of extraction should be further improved in the full scale technology, but it is not requires serious changing in the setting and somewhat longer extraction column further lowers the nitrogen content.

Applying a software developed in-house which have evaluated the photos like a photometer to estimate the efficiency of extraction and suggested increase in column length. If the starting concentration of the fat is 900 mg/kg (as it was measured in the lab) than the concentration in different extraction units are the following, as shown on Table 6:

**Table 6**

| | mg/kg (N) | |
|---|---|---|
| unit 4. | 900 | measured in the lab |
| unit 3. | 622 | calculated from data obtained of the photo |
| unit 2. | 330 | calculated from data obtained of the photo |
| unit 1. | 215 | calculated from data obtained of the photo |
| unit 1. | 250 | measured in the lab |
| +1 unit | 135 | extrapolation from the measured data |
| +2 unit | 84 | extrapolation from the measured data |
| +3 unit | 52 | extrapolation from the measured data |

According to this calculation 6 unit must be enough for the required purity if it must be below 200 mg/kg.

Analysis of results of EXP6

**Table 7**

| | P mg/kg | Cl mg/kg | N mg/kg | PE mg/kg | Solids % | Water % | Unsponifiable % | Free fatty acids % | Flashpoint celcius | Methanol mg/kg | Acetone mg/kg |
|---|---|---|---|---|---|---|---|---|---|---|---|
| ORIGINAL FAT | <1 | <10 | 1100 | 12 | 0.03 | 0.23 | 0.76 | 14.0 | Analysis was not done | | |
| | | | | | | | | | | | |
| FINAL PRODUCT EXP6 | <1 | 11 | 240 | 16 | 0.02 | 0.10 | 0.6 | 3.6 | 240 | 26 | 110 |

EXAMPLE 6

The main objective of this pilot study was to study different fat raw materials in the technology and producing 10-30 kg samples from the purified fat samples for further application. The produced purified samples were found to be suitable for testing the quality of the processed fat and the level of quality was found to be appropriate for marketing.

The applied setting compromised 5 pieces of ECR 60 unit and an upper and lower containers. It was exactly the same than in the pilot experiment described in Example 5.

The main questions were in these experiments:

1. Risk factor of the extraction: how the different raw material behave in the technology, what is the risk of emulsion forming.
2. Application of reflux for decreasing the applied amount of methanol (methanol/fat ratio).
3. Testing of the double reflux (both methanol and fat) for the better efficiency of extraction.

The following materials were used in the experiments below:

- 300kg of methanol
- 100kg of Bovine fat, mostly separated from bones (high melting point)
- 100kg of Bovine fat, separated from bovine carcasses (high melting point)
- 50kg of Poultry (chicken) fat (relatively low melting point)

The pre-eminent objectives of the experiments shown in this Example were:

1. Finding preferred paramaters for example reflux ratio, stirring and temperature.
2. Production of purified fat samples from the 3 types of raw materials.

General settings:

The fat was introduced to the extractor unit 4 and was mixed with the upcoming phase. The density of methanol is 0.77-0.79 g/cm3, the fat density is 0.85-0.87 g/cm3. The raffinate collects on the bottom of column, the extract collects on the top. The phase border is at the lower container, the methanol is the continuous phase. The rate of stirring can be controlled at the driving motor. (Same as in Example 5.)

The column was filled with methanol, the temperature of methanol was room temperature, the fat temperature must be at least 60 °C and maximum 75 °C.

Reflux:

From the extractor unit 5 the mixture of fat and methanol was introduced to the extractor unit 3 (see EXP8-10 in Example 5). The reflux amount can be controlled by a peristaltic pump. This process decreases the amount of the applied methanol amount and fat loss. The fat, especially the low melting point fat partially dissolve in the methanol therefore the extract will contain methanol, nitrogen compounds, free fatty acids, glycerol, and fat (mainly low melting point fat).

Description of individual experiments:

**EXP11.:** Fat: LK3 bovine fat. Testing of temperature, stirring rate and reflux ratio. Reproducing the last experiment from the previous pilot study but different fat type. 113/57 reflux ratio.
**result:** Temperature should be as high as possible in the top, practically 60 °C. Stirring ratio: 77 rpm is enough, not necessary to apply higher rate of stirring. The 113/57 reflux ratio can be decreased, no emulsion in the top layer. Stable and good production. The fat is light yellow, the colour of extract is lighter, the raffinate has a very small unpleasant smell. Sample 1: LK3 fat, raw material, 2: raffinate, 3: extract.
**EXP12.:** Fat: LK3 bovine fat. 60 °C. Stirring ratio: 77 rpm. 85/85 reflux ratio.
**result:** Temperature should be as high as possible in the top, practically 60 °C. Stirring ratio: 77 rpm is enough, not necessary to apply higher rate of stirring. The 113/57 reflux ratio can be decreased, no emulsion in the top layer. Stable and good production.
EXP13.

**result:** Temperature should be as high as possible in the top, practically 60 °C. Stirring ratio: 77 rpm is enough, not necessary to apply higher rate of stirring. The 113/57 reflux ratio can be decreased, no emulsion in the top layer. Stable and good production.

EXP 14.

**result:** Temperature should be as high as possible in the top, practically 60 °C. Stirring ratio: 77 rpm is enough, not necessary to apply higher rate of stirring. The 113/57 reflux ratio can be decreased, no emulsion in the top layer. Stable and good production.

EXP 15.

**result:** Temperature should be as high as possible in the top, practically 60 °C. Stirring ratio: 77 rpm is enough, not necessary to apply higher rate of stirring. The 113/57 reflux ratio can be decreased, no emulsion in the top layer. Stable and good production.

EXP16.

**result:** Temperature should be as high as possible in the top, practically 60 °C. Stirring ratio: 77 rpm is enough, not necessary to apply higher rate of stirring. The 113/57 reflux ratio can be decreased, no emulsion in the top layer. Stable and good production.

EXP 17.

**result:** Temperature should be as high as possible in the top, practically 60 °C. Stirring ratio: 77 rpm is enough, not necessary to apply higher rate of stirring. The 113/57 reflux ratio can be decreased, no emulsion in the top layer. Stable and good production.

EXP18.

**result:** Temperature should be as high as possible in the top, practically 60 °C. Stirring ratio: 77 rpm is enough, not necessary to apply higher rate of stirring. The 113/57 reflux ratio can be decreased, no emulsion in the top layer. Stable and good production.

EXP 19

A summary of the setting of experiments 11 to 19 is shown in Table 8.

**Table 8**

| | RPM | reflux ratio<br>MetOH feed/reflux | Heavy FEED FAT [kg/h] | LIGHT FEED MeOH [kg/h] | Heavy OUTPUT RAFF [kg/h] | Light OUTPUT EXTR [kg/h] |
|---|---|---|---|---|---|---|
| **EXP11.** | 77 | 113/57 | 10.2 | 4.69 | 10.31 | 4.61 |
| **EXP12.** | 77 | 85/85 | 10.44 | 4.38 | 10.92 | 3.54 |
| **EXP13.** | 77 | 57/113 | 10.63 | 2.97 | 8.37 | 4.63 |
| **EXP14.** | 77 | 43/127 | 10.2 | 2.23 | 9.17 | 3.30 |
| **EXP15.** | 77 | 43/127 | 10.6 | 2.24 | 11.04 | 1.12 |
| **EXP16.** | 77 | 85/85 | 10.5 | 4.29 | 10.29 | 4.37 |
| **EXP17.** | 77 | 85/85 | 8.60 | 5.00 | 8.75 | 4.45 |
| **EXP18.** | 77 | 85/85 | 9.05 | 4.25 | 9.47 | 3.40 |
| **EXP19.** | 77 | 187/0 | 10.32 | 9.03 | 9.57 | 9.63 |

| | Temperature | | [°C] | | | | |
|---|---|---|---|---|---|---|---|
| | **Fat** | | | | | | **ME-OH** |
| | | Unit5. | Unit4. | Unit3. | Unit2. | Unit1. | |
| | **CH1** | CH2 | CH3 | CH4 | CH5 | CH6 | **CH7** |
| **EXP11.** | **59.6** | 51.9 | 51.8 | 49.0 | 51.2 | 20.1 | **24.0** |
| **EXP12.** | **59.8** | 55.7 | 56.1 | 55.4 | 56.3 | 54.9 | **22.1** |
| **EXP13.** | **60.2** | 55.9 | 56.0 | 55.4 | 56.3 | 54.8 | **22.7** |
| **EXP14.** | | | | | | | |
| **EXP15.** | **68.7** | 57.4 | 57.2 | 52.2 | 55.5 | 55.9 | **23.7** |
| **EXP16.** | **69.7** | 57.0 | 55.8 | 53.0 | 55.8 | 54.3 | **24.6** |
| **EXP17.** | **61.8** | 55.7 | 55.5 | 53.3 | 56.1 | 54.9 | **25.0** |
| **EXP18.** | **64.9** | 58.9 | 57.7 | 56.8 | 60.5 | 58.9 | **22.9** |
| **EXP19.** | **63.3** | 50.3 | 48.9 | 46.8 | 46.1 | 40.8 | **23.0** |

**The temperature:**

All of the experiments the temperature was set to the highest possible, i.e. typically to 60-63°C. Increasing the temperature to 65 resulted the boiling of methanol, although the measured boiling point of fat saturated methanol was 66°C.

We concluded that the upper part of the extraction column has to set to 62-63°C and the bottom can be higher. In the case of 5 m extraction column the temperature can be about 75°C and a 10 meter column hight can let 85°C. The high bottom temperature desirable in the case of high melting point fats like bovine fat.

**Result for Examples 5 and 6**

*Efficiency of extraction*

The efficiency of extraction can be measured for example by measuring

- the total nitrogen content or
- the remaining volatile compound content with GC-MS.

Furthermore, the color of fat and the color of raffinate is an indication of the process. In a running extraction process the extraction efficiency can be checked and followed by a photometric sensor.

*Flow rates and extraction time*

The applied preferred flow rates were in the range of 3-12 kg/h, preferably about 9 kg/h for both the methanol and the fat. In cases wherein reflux is applied the flow rate of fat can be decreased to the 2/3 what is about 6 kg/h. The volume of 4 extraction units altogether is 4x990 cm3 and the volume of lower settler is 1730 cm3. Extraction happens in the stirred region only therefore when extraction time is calculated the volume to be considered is 3.96 $dm^3$. About its half is the volume of the fat. If we calculate with the density of 1.5 kg fat was present in the extraction zone in the case of 1 to 1 fat/methanol ratio and 9 kg/h flow rate. Therefore the extraction time was 9.9 minutes. For the reaching of better extraction efficiency the extraction time should be increased by using more extraction units. Probably in further experiments including large-scale experiments extraction time should be increased to 15-20 minutes, i.e. the duration time of fat in the extraction zone should be at least 15 minutes.

Ratio of fat/methanol

The ratio of fat/methanol inlet was set at the beginning to 1. At this ratio the emulsion forming was not significant. The objective of experiment 2 (EXP 2) was to increase the fat/methanol ratio, because it could decrease the required amount of methanol in the technology. To give an example, when 15 kg/h fat and 5 kg/h methanol flow rate was used (the fat/methanol ratio was set to 3) the amount of output for the heavy fraction - what should be around 15 kg/h - was only 5 kg/h. In the same time the light output instead of 5 kg/h was about 15 kg/h. It was the indication of stable emulsion forming which preferably should be avoided. In the case of emulsion forming there is no separation of the phases therefore the technology is not working properly.

After this experiment we concluded we should not advisably apply higher fat/methanol supply ratio than about 1 at least on the column. A way is for the applying of lower amount of methanol, i.e. a higher fat/methanol ratio in the feeds, is the reflux. In this case on the column the fat/methanol ratio is still about 1, but there is smaller methanol feed. The reflux ratio was tested at two parameters in the EXP8-10. In the EXP8 when the feed of fat was 10 kg/h the reflux was 6 kg/h while the methanol feed was 3 kg/h. At this setting emulsion formed so we decided to increase the methanol feed and decrease the reflux. In the EXP9 the methanol feed was 6 kg/h and the reflux was 3 kg/h. This setting resulted an emulsion free operation. It was a good method for increasing of the fat/methanol feed by decreasing the methanol requirement.

Temperature

The temperature range of extraction has its limitations. The upper limit is the boiling point of methanol, what is 63°C at atmospheric pressure. The lower limit is the freezing point of the fat. According to our findings the fat has no one direct freezing point. If temperature of the fat is 40, 45 or 50°C different fractions will melt. The saturated fat components has higher melting point than the less saturated ones. The composition of fat is important it has strong effect on melting. The extraction could be more economical at lower temperatures, because less fat will be dissolved in the methanol while the more soluble contaminants go to the methanol phase. In the EXP3 and EXP4 the effect of temperature of the extraction was tested. In the EXP3 the upper settler was cooled back to 5°C and the extraction temperature was 40°C. With this setting the emulsion forming started, it was not so bad than in the EXP 2, but still was not advantageous. In the EXP4 the whole extraction column was set to 35°C. The signs of emulsion forming were detected again. It has been concluded that when the fat is solid or partially solid there is higher chance for the emulsion forming. Therefore preferably the fat should be melted. The final conclusion from this experiments was the optimal extraction temperature of the fat is between 45-60°C preferably 50-55°C at atmospheric pressure. On this temperature the total amount of the fat is liquid (melted) and the fat solubility in the methanol still acceptable.

The initial temperature of (bovine) fat should preferably be at least 50°C and maximum 60°C, preferably 55°C.

The temperature of methanol can be anywhere between 10-60°C, highly preferably it is 25°C.

Summary of the emulsion problem

The stable emulsion forming is deleterious and is a limiting factor of the technology; thus, it should be avoided. In particular in case of counter current extraction the problem must be seriously dealt with. In the pilot experiment at VTT we have found that temperature and the ratio of fat/methanol has influence on the emulsion forming and its stability. Controlling the stirring rate can be used to help avoiding the formation of emulsion. For example the stirring rate was 78 or 130 rpm in our experiments. Some cases like in EXP2 the 130 rpm was too high, and emulsion forming was detected.

The emulsion forming can be checked in the industrial technology by using a tool which can measure the light dispersion in the different extraction units. In the case of stabile emulsion forming we would have an opportunity to stop this process (1) with the decreasing of the stirring rate (which decrease the efficiency of removing the contaminants from the fat), (2) increasing the introduced amount of methanol or decreasing the amount of fat, or (3?) decreasing of the amount of reflux. We have to test at the industrial technology at the starting phase.

Efficiency of extraction

The efficiency of extraction can be controlled using the parameters above. First of all the temperature and the fat/methanol ratio has effect on it. Stirring can be used to further control efficiency and emulsion forming. In this setting already 6 equivalent units were sufficient to reduce N content by a factor of at least 4.

Filtration and cooling

The extract, what is the light phase, is a solution. In this solution the methanol is the solvent and the dissolve compounds are the contaminants, like acid-amides, indole, -pyrrolidinone, 2-piperidinone and fat. Before the pilot experiment we planned a cooling and a separation step after the extraction. In the pilot study we wanted to test the necessity of this step. The extract was cooled to 5 °C and filtrated. The total dissolved dry matter content of extract was between 15% and 20%. The removable or recoverable fat amount was 2%. We suggest it is not worth building a cooling and filtration step to the technology for getting back this fat, it is more economical to increase the fat/methanol ratio in the extraction step by using reflux. This reflux is much more simple and more effective and more economical than the recovery of fat from the extract with cooling and filtration.

Reflux

The application of reflux is a very good and promising solution for increasing the fat/methanol ratio. Because of the limited time for the pilot, only the 2/3 (EXP8) and in an other experiment 1/3 (EXP9) of total methanol feed was refluxed. At the EXP9 we had no stable emulsion forming but in the EXP8 emulsion formed. We contemplate that even a 1/2 reflux ratio can be achieved without emulsion. But anyway even the at least 1/3 reflux ratio can result more economical technology and is preferred.

Composition of extract and raffinate

The extract had 19-20% dry matter content, what is fat and fatty acids and nitrogen compounds. The raffinate contained 10.5 % residual methanol. Concerning the requirement the methanol content of fat can be decreased by distillation.

EXAMPLE 7

The main objective of this pilot study was to produce about 50 kg purified fat to test the purified fat in the biofuel production.

The same setting of experiment was applied than the previous experiment.

Starting of the extraction:

The column was filled with methanol, the temperature of methanol was room temperature, the fat temperature was 55 °C.

The fat was introduced to the column to the $4^{th}$ unit. The rate of stirring can be controlled at the driving motor. It was set to 75 rpm for the whole experiment.

Setting of experiments:

The two experiments were carried with the following settings:

**EXP20.:** Fat: bovine and pig fat mixture. Stirring rate was 75 rpm, reflux ratio was 154/25.
**result:** Cleaning is visible and the colour, smell of samples indicated the cleaning as well.
**EXP21.:** Fat: purified fat from the EXP 20. was purified further. Temperature was 60 °C Stirring ratio: 75 rpm. reflux ratio: 154/25.
**result:** The color of EXP21 sample is not very different than the EXP20, but the smell is little bit less.

Composition of raffinate and raw material is shown in Table 9.

**Table 9**

| | Raw material | 1. round EXP 20. | 2. round EXP 21 | Limit (Industry expectation) |
|---|---|---|---|---|
| Free fatty acids, FFA | 14,2 % | 5,1 % | 2,1 % | <15 % |
| Total -N | 524 mg/kg | 169 mg/kg | 99 mg/kg | <200 mg/kg |
| Phosphorus, P | 37 mg/kg | 24 mg/kg | 23 mg/kg | <50 mg/kg |

It can be seen that the raffinate of the invention meets the industry expectations or even much better quality.

EXAMPLE 8

Based on the data above we can start to plan the industrial scale technology.
An industrial scale technology is planned for a 50 tons/day, 2 tons/hour. The stored, recycled methanol demand estimated 5 tons, but it needs more accurate calculation.
The plan of technology can be summarize in the following process flow diagram shown on Figure 10.
Animal fat is fed to Extractor 10 from the Fat tank 1 (heavy feed) wherein the solvent (here: methanol) is fed from Methanol tank 2 (light feed). Raffinate is lead to Raffinate fat tank 3 from which it is transferred into Vacuum evaporator 11 wherein residual methanol is removed. The methanol free product is the final product. The methanol removed in the Vacuum evaporator 11 can be lead back into the Extractor 10. Similarly the extract (light extract) is lead away at the top of the column to Reflux tank 4 wherefrom a controlled part can be lead back as reflux into the Extractor 10. Methanol can also obtained from 5torage tank 5. The light extract can also be lead into Evaporator 12 wherein the methanol is evaporated (optionally lead back into the process) and the residue comprising the contaminants can be further stored and utilized.

INDUSTRIAL APPLICABILITY

The present invention is applicable in the field of rendering animal fat, biofuel production, soil fertilization and utilization of animal waste products.
The method is suitable to easily achieve a four times lower nitrogen content, very low amount of residue methanol, high enough flash point without deterioration in any relevant parameters. In the method of the invention also the smell was almost completely removed and that the colour got lighter.
Methanol can be re-introduced into the system and the compounds removed find a use in soil fertilization. Therefore an environment-friendly system for animal fat processing is provided.

## Claims

**1.** A method for processing rendered animal fat wherein low nitrogen-content rendered animal fat is prepared by removal of nitrogen compounds selected from a nitrogen containing heterocyclic compounds or volatile nitrogen containing compounds or small cyclic nitrogen compounds from rendered animal fat by extraction said method comprising the steps of

a) providing rendered animal fat,

b) subjecting the rendered animal fat to solvent extraction by using an extraction solvent having at least 80% methanol content, whereby
low nitrogen-content rendered animal fat and an extract is obtained,
c) optionally assessing the removal of a nitrogen compound selected from a nitrogen containing heterocyclic compounds or volatile nitrogen containing compounds or small cyclic nitrogen compounds from rendered animal fat,
d) optionally separating the extract into solvent and extracted material comprising the nitrogen compounds,
e) optionally recycling at least a part of the separated solvent obtained in step d) into the solvent extraction,
f) optionally utilizing the extracted material comprising the nitrogen compounds obtained in step d), thereby obtaining low nitrogen-content rendered animal fat.

**2.** The method according to claim 1 wherein the extraction solvent has at least 90% methanol content, or preferably at least 95% or 98% methanol content, or more preferably at least 99% methanol content, or is absolute methanol.

**3.** The method according to any of claims 1 to 2 wherein the nitrogen compounds which are removed from the rendered animal fat are small cyclic nitrogen compounds selected from compounds having a 5 membered heterocycle, a 6 membered heterocycle, an 8 membered, a 9 membered or a 10 membered heterocycle, said heterocycle

- comprising at least one nitrogen,
- being aromatic or non-aromatic,
- being substituted or unsubstituted;

preferably wherein the small cyclic nitrogen compounds are selected from pyrrolidin compounds, piperidine compounds and indole compounds, wherein preferably at least the following nitrogen compounds are removed pyrrolidin compounds and piperidine compounds.

**4.** The method according to any of the previous claims wherein the nitrogen compounds have a distribution ratio K between the rendered animal fat and the extraction solvent of at least 1, preferably at least 1.2, more preferably at least 1.3.

**5.** The method according to any of the previous claims wherein in step b)
the extraction is a counter-current method,
wherein the ratio of the heavy phase (animal fat) and the light phase (solvent) is set to at most 1.2, preferably to at most about 1, wherein preferably emulsion forming is controlled during the extraction optionally by controlling stirring.

**6.** The method according to any of the previous claims wherein

d) the extract is separated into solvent and the extracted material comprising the nitrogen containing compounds, and
e) at least a part of the separated solvent obtained in step d) is recycled into the solvent extraction as an extraction solvent.

**7.** The method according to any of the previous claims wherein

d) the extract is separated into solvent and the extracted nitrogen containing compounds, and
e) the extracted material comprising volatile nitrogen containing compounds obtained in step d) are utilized.

**8.** Use of methanol in extraction solvent for removal of volatile nitrogen compounds from rendered animal fat by solvent extraction
wherein low nitrogen-content rendered animal fat is prepared by removal of said volatile nitrogen compounds from rendered animal fat by solvent extraction
wherein the extraction solvent has at least 90% methanol or preferably at least 95% or 98% methanol content, or more preferably at least 99% methanol content, or is absolute methanol content.

**9.** The use of claim 8 for the preparation of a low nitrogen-content rendered animal fat.

**10.** The use of any of claims 8 or 9 for the preparation of a soil or compost additive wherein
the extract is separated into solvent and the extracted volatile nitrogen containing compounds, and

the extracted material comprising volatile nitrogen containing compounds so obtained is utilized as a compost or soil additive for improving compost material or soil.

## Patentansprüche

1. Verfahren zur Verarbeitung von ausgeschmolzenem tierischem Fett, wobei ausgeschmolzenes tierisches Fett mit niedrigem Stickstoffgehalt durch Entfernen von Stickstoffverbindungen ausgewählt aus stickstoffhaltigen heterocyclischen Verbindungen oder flüchtigen stickstoffhaltigen Verbindungen oder kleinen cyclischen Stickstoffverbindungen aus ausgeschmolzenem tierischem Fett durch Extraktion hergestellt wird,
wobei das Verfahren die folgenden Schritte umfasst:

    a) Bereitstellung von ausgeschmolzenem tierischem Fett,
    b) Unterwerfen des ausgeschmolzenen tierischen Fettes zur Lösungsmittelextraktion unter Verwendung eines Extraktionslösungsmittels mit mindestens 80% Methanolgehalt, wodurch
    ausgeschmolzenes tierisches Fett mit niedrigem Stickstoffgehalt und ein Extrakt erhalten wird,
    c) gegebenenfalls Bewerten der Entfernung einer Stickstoffverbindung ausgewählt aus stickstoffhaltigen heterocyclischen Verbindungen oder flüchtigen stickstoffhaltigen Verbindungen oder kleinen cyclischen Stickstoffverbindungen aus ausgeschmolzenem tierischem Fett,
    d) gegebenenfalls Trennen des Extrakts in Lösungsmittel und extrahiertes Material, das die Stickstoffverbindungen enthält,
    e) gegebenenfalls Zurückführung mindestens eines Teils des in Schritt d) erhaltenen, abgetrennten Lösungsmittels in die Lösungsmittelextraktion,
    f) gegebenenfalls Verwendung des extrahierten Materials, das die in Schritt d) erhaltenen Stickstoffverbindungen enthält,

    wodurch tierisches Fett mit niedrigem Stickstoffgehalt erhalten wird.

2. Verfahren nach Anspruch 1, wobei das Extraktionslösungsmittel mindestens 90% Methanolgehalt, oder vorzugsweise mindestens 95% oder 98% Methanolgehalt, oder besonders bevorzugt mindestens 99% Methanolgehalt aufweist, oder absolutes Methanol ist.

3. Verfahren nach einem der Ansprüche 1 bis 2, wobei die Stickstoffverbindungen, die aus dem ausgeschmolzenen tierischen Fett entfernt werden, kleine cyclische Stickstoffverbindungen ausgewählt aus Verbindungen mit einem 5-gliedrigen Heterocyclus, einem 6-gliedrigen Heterocyclus, einem 8-gliedrigen, einem 9-gliedrigen oder einem 10-gliedrigen Heterocyclus sind, wobei der Heterocyclus

    - enthaltend mindestens einen Stickstoff,
    - aromatisch oder nicht aromatisch sein,
    - substituiert oder unsubstituiert sein;

    vorzugsweise wobei die kleinen cyclischen Stickstoffverbindungen aus Pyrrolidinverbindungen, Piperidinverbindungen und Indolverbindungen ausgewählt sind, wobei vorzugsweise mindestens die folgenden Stickstoffverbindungen entfernt werden: Pyrrolidinverbindungen und Piperidinverbindungen.

4. Verfahren nach einem der vorhergehenden Ansprüche, wobei die Stickstoffverbindungen ein Verteilungsverhältnis K zwischen dem ausgeschmolzenen tierischen Fett und dem Extraktionslösungsmittel von mindestens 1, vorzugsweise mindestens 1,2, besonders bevorzugt mindestens 1,3 aufweisen.

5. Verfahren nach einem der vorhergehenden Ansprüche, wobei in Schritt b) die Extraktion eine Gegenstrommethode ist,
wobei das Verhältnis der Schwerphase (tierisches Fett) und der Leichtphase (Lösungsmittel) auf höchstens 1,2, vorzugsweise auf höchstens etwa 1 eingestellt ist, wobei vorzugsweise die Emulsionsbildung während der Extraktion gegebenenfalls durch Steuerung des Rührens gesteuert wird.

6. Verfahren nach einem der vorhergehenden Ansprüche, wobei

    d) Trennen des Extrakts in Lösungsmittel und das extrahierte Material, das die stickstoffhaltige Verbindungen

enthält, und
e) Zurückführung mindestens eines Teils des in Schritt d) erhaltenen, abgetrennten Lösungsmittels als Extraktionslösungsmittel in die Lösungsmittelextraktion.

**7.** Verfahren nach einem der vorhergehenden Ansprüche, wobei

d) Trennen des Extrakts in Lösungsmittel und die extrahierte stickstoffhaltige Verbindungen, und
e) Verwendung des in Schritt d) erhaltenen, extrahierten Materials, das flüchtige stickstoffhaltige Verbindungen enthält.

**8.** Verwendung von Methanol in Extraktionslösungsmittel zur Entfernung von flüchtigen Stickstoffverbindungen aus ausgeschmolzenem tierischem Fett durch Lösungsmittelextraktion,
wobei ausgeschmolzenes tierisches Fett mit niedrigem Stickstoffgehalt durch Entfernen der flüchtigen Stickstoffverbindungen aus ausgeschmolzenem tierischem Fett durch Lösungsmittelextraktion hergestellt wird,
wobei das Extraktionslösungsmittel mindestens 90% Methanolgehalt, oder vorzugsweise mindestens 95% oder 98% Methanolgehalt, oder besonders bevorzugt mindestens 99% Methanolgehalt aufweist, oder absolutes Methanol ist.

**9.** Verwendung nach Anspruch 8 zur Herstellung eines ausgeschmolzenen tierischen Fettes mit niedrigem Stickstoffgehalt.

**10.** Verwendung nach einem der Ansprüche 8 oder 9 zur Herstellung eines Boden- oder Kompostzusatzes, wobei der Extrakt in Lösungsmittel und die extrahierte, flüchtige stickstoffhaltige Verbindungen getrennt wird, und
das so erhaltene extrahierte Material, das flüchtige stickstoffhaltige Verbindungen enthält, als Kompost- oder Bodenzusatz zur Verbesserung von Kompostmaterial oder Boden verwendet wird.

## Revendications

**1.** Procédé de traitement de graisse animale fondue dans lequel de la graisse animale fondue à faible teneur en azote est préparée par élimination de composés azotés choisis parmi des composés hétérocycliques azotés ou des composés volatils azotés ou de petits composés azotés cycliques de la graisse animale fondue par extraction ledit procédé comprenant les étapes de

a) fournir de la graisse animale fondue,
b) soumettre la graisse animale fondue à une extraction par solvant en utilisant un solvant d'extraction ayant un teneur en méthanol d'au moins 80%, moyennant quoi
une graisse animale fondue à faible teneur en azote et un extrait sont obtenus,
c) éventuellement évaluer l'élimination d'un composé azoté choisi parmi les composés hétérocycliques azotés ou les composés volatils azotés ou les petits composés azotés cycliques de la graisse animale fondue,
d) éventuellement séparer l'extrait en solvant et en matière extraite comprenant les composés azotés,
e) éventuellement recycler au moins une partie du solvant séparé obtenu à l'étape d) dans l'extraction par solvant,
f) éventuellement utiliser la matière extraite comprenant les composés azotés obtenus à l'étape d),

obtenant ainsi une graisse animale fondue à faible teneur en azote.

**2.** Procédé selon la revendication 1, dans lequel le solvant d'extraction a un teneur en méthanol d'au moins 90%, ou de préférence un teneur en méthanol d'au moins 95% ou 98%, ou plus préférablement un teneur en méthanol d'au moins 99%, ou est du méthanol absolu.

**3.** Procédé selon l'une quelconque des revendications 1 à 2, dans lequel les composés azotés qui sont éliminés de la graisse animale fondue sont de petits composés azotés cycliques choisis parmi les composés ayant un hétérocycle à 5 chaînons, un hétérocycle à 6 chaînons, un hétérocycle à 8 chaînons, à 9 chaînons ou à 10 chaînons, ledit hétérocycle

- comprenant au moins un azote,
- étant aromatique ou non aromatique,
- étant substitué ou non substitué ;

de préférence où les petits composés azotés cycliques sont choisis parmi les composés de pyrrolidine, les composés de pipéridine et les composés d'indole, où de préférence au moins les composés azotés suivants sont éliminés : les composés de pyrrolidine et les composés de pipéridine.

**4.** Procédé selon l'une quelconque des revendications précédentes, dans lequel les composés azotés ont un rapport de distribution K entre la graisse animale fondue et le solvant d'extraction d'au moins 1, de préférence d'au moins 1,2, plus préférablement d'au moins 1,3.

**5.** Procédé selon l'une quelconque des revendications précédentes, dans lequel à l'étape b) l'extraction est une méthode à contre-courant,
dans lequel le rapport entre la phase lourde (graisse animale) et la phase légère (solvant) est réglée à au plus 1,2, de préférence à au plus environ 1, dans laquelle de préférence la formation d'émulsion est contrôlée pendant l'extraction, éventuellement en contrôlant l'agitation.

**6.** Procédé selon l'une quelconque des revendications précédentes, dans lequel

d) l'extrait est séparé en solvant et en la matière extraite comprenant les composés azotés, et
e) au moins une partie du solvant séparé obtenu à l'étape d) est recyclée dans l'extraction par solvant en tant que solvant d'extraction.

**7.** Procédé selon l'une quelconque des revendications précédentes, dans lequel

d) l'extrait est séparé en solvant et en les composés azotés extraits, et
e) le matériau extrait comprenant des composés volatils azotés obtenus à l'étape d) est utilisé.

**8.** Utilisation de méthanol dans un solvant d'extraction pour l'élimination des composés volatils azotés d'une graisse animale fondue par extraction par solvant
dans lequel de la graisse animale fondue à faible teneur en azote est préparée en éliminant lesdits composés volatils azotés de la graisse animale fondue par extraction par solvant
dans lequel le solvant d'extraction a un teneur en méthanol d'au moins 90%, ou de préférence un teneur en méthanol d'au moins 95% ou 98%, ou plus préférablement un teneur en méthanol d'au moins 99%, ou est du méthanol absolu.

**9.** Utilisation selon la revendication 8 pour la préparation d'une graisse animale fondue à faible teneur en azote.

**10.** Utilisation selon l'une quelconque des revendications 8 ou 9 pour la préparation d'un additif de sol ou de compost dans lequel
l'extrait est séparé en solvant et en les composés volatils azotés extraits, et
le matériau extrait comprenant des composés volatils azotés ainsi obtenu est utilisé comme additif de compost ou de sol pour améliorer le matériau de compost ou le sol.

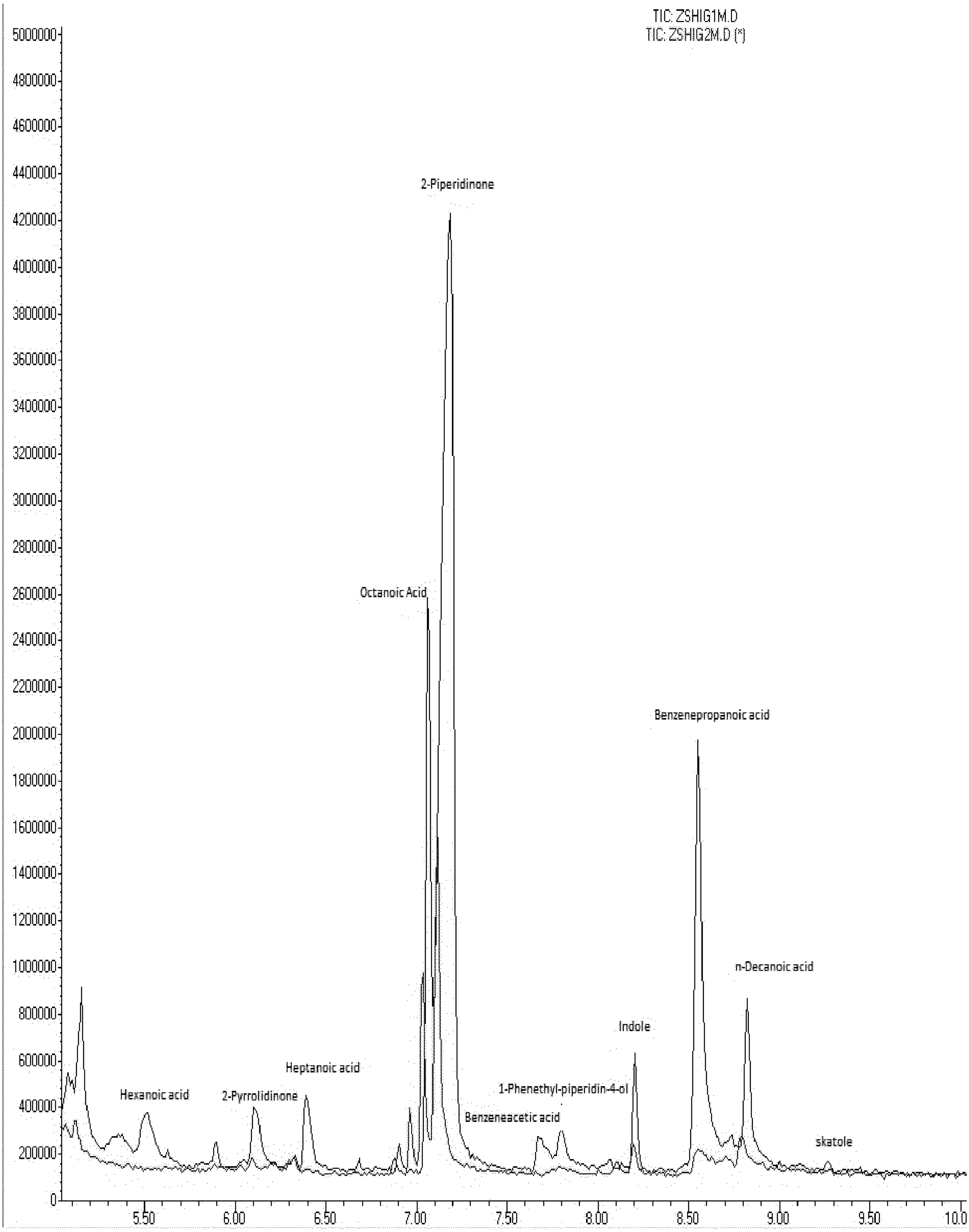
TIC: ZSHIG1M.D
TIC: ZSHIG2M.D (*)
5000000
4800000
4600000
4400000
4200000
4000000
3800000
3600000
3400000
3200000
3000000
2800000
2600000
2400000
2200000
2000000
1800000
1600000
1400000
1200000
1000000
800000
600000
400000
200000
0
5.50
6.00
6.50
7.00
7.50
8.00
8.50
9.00
9.50
10.0
2-Piperidinone
Octanoic Acid
Benzenepropanoic acid
n-Decanoic acid
Indole
Heptanoic acid
Hexanoic acid
2-Pyrrolidinone
1-Phenethyl-piperidin-4-ol
Benzeneacetic acid
skatole

Fig. 1

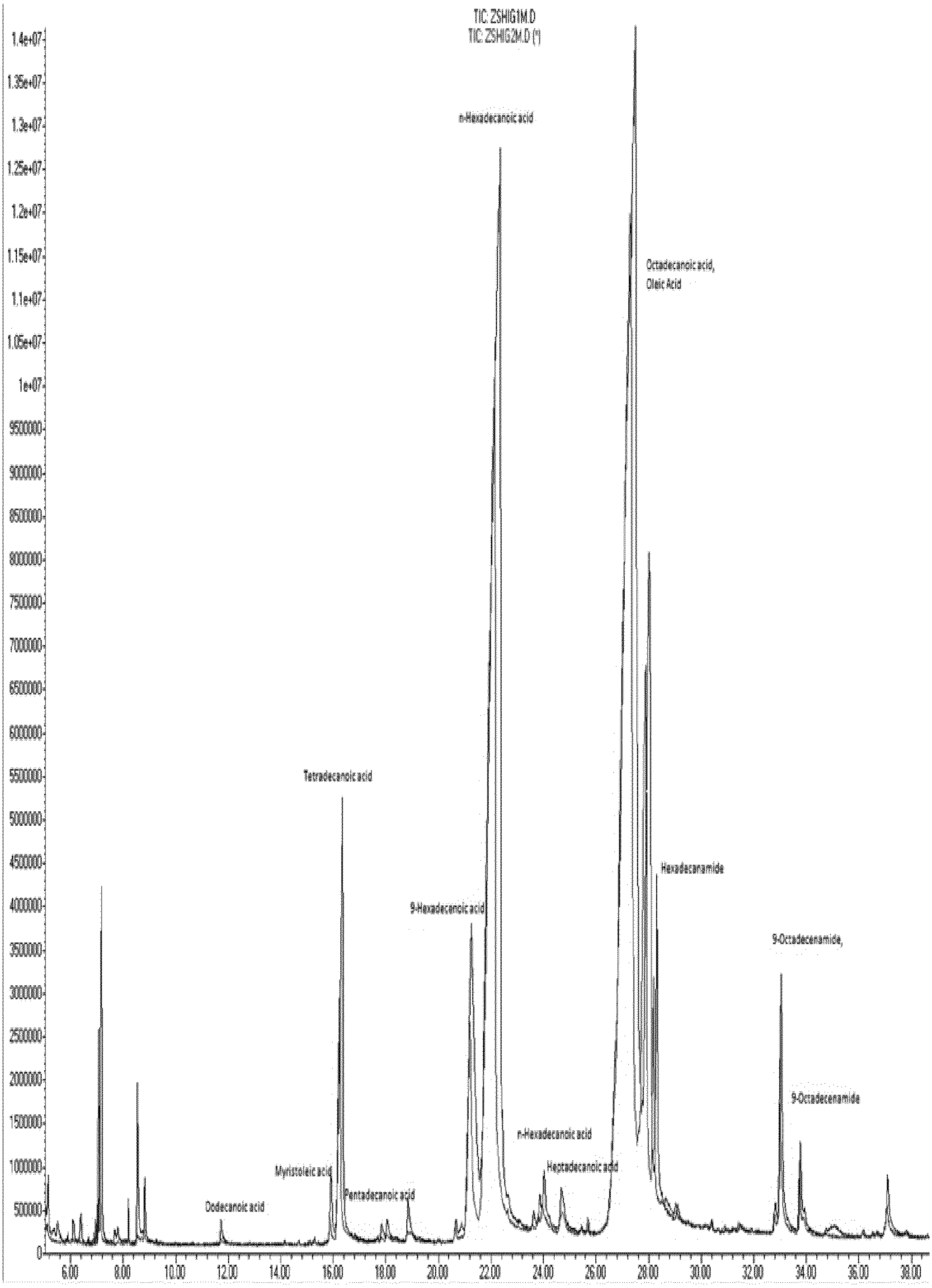
TIC: ZSHIG1M.D
TIC: ZSHIG2M.D (*)
n-Hexadecanoic acid
Octadecanoic acid,
Oleic Acid
Tetradecanoic acid
Hexadecanamide
9-Hexadecenoic acid
9-Octadecenamide,
9-Octadecenamide
n-Hexadecanoic acid
Heptadecanoic acid
Myristoleic acid
Pentadecanoic acid
Dodecanoic acid

**Fig. 2**

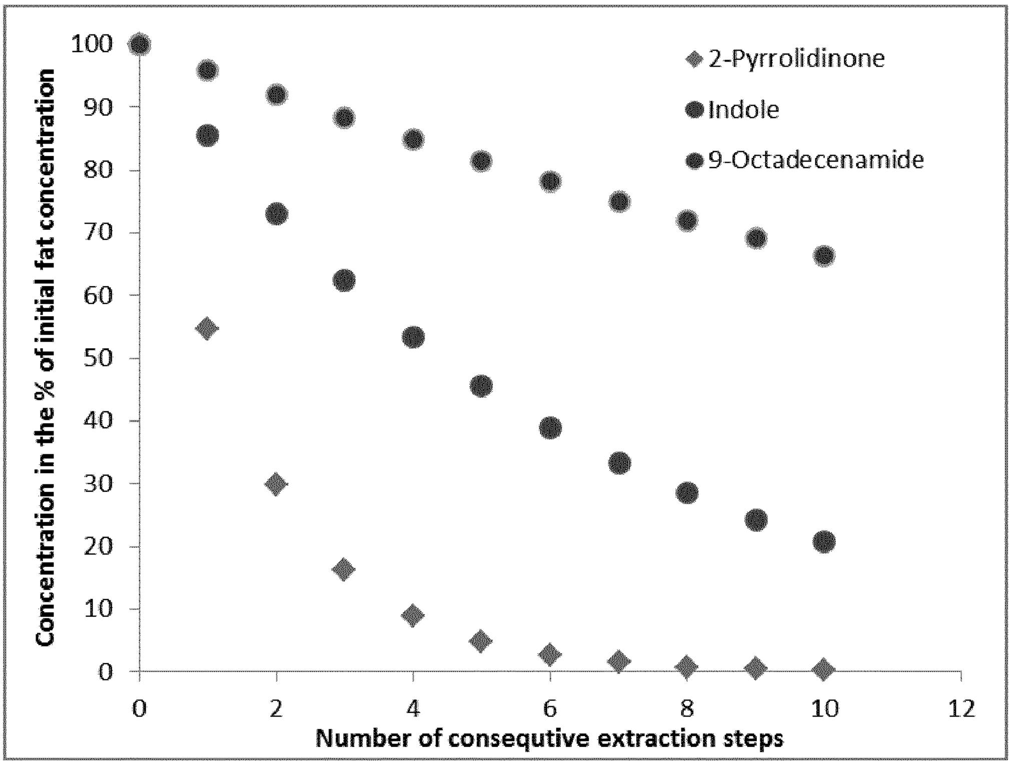
2-Pyrrolidinone
Indole
9-Octadecenamide
Concentration in the % of initial fat concentration
100
90
80
70
60
50
40
30
20
10
0
0
2
4
6
8
10
12
Number of consequtive extraction steps

**Fig 3**

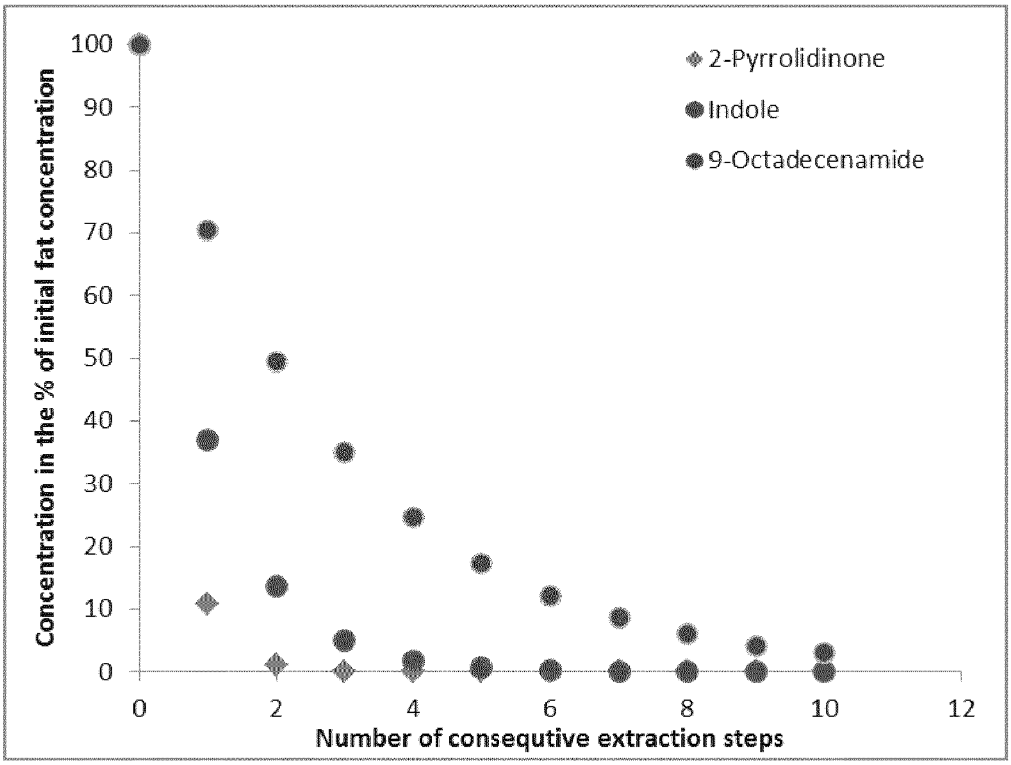
2-Pyrrolidinone
Indole
9-Octadecenamide
Concentration in the % of initial fat concentration
100
90
80
70
60
50
40
30
20
10
0
0
2
4
6
8
10
12
Number of consequtive extraction steps

**Fig 4**

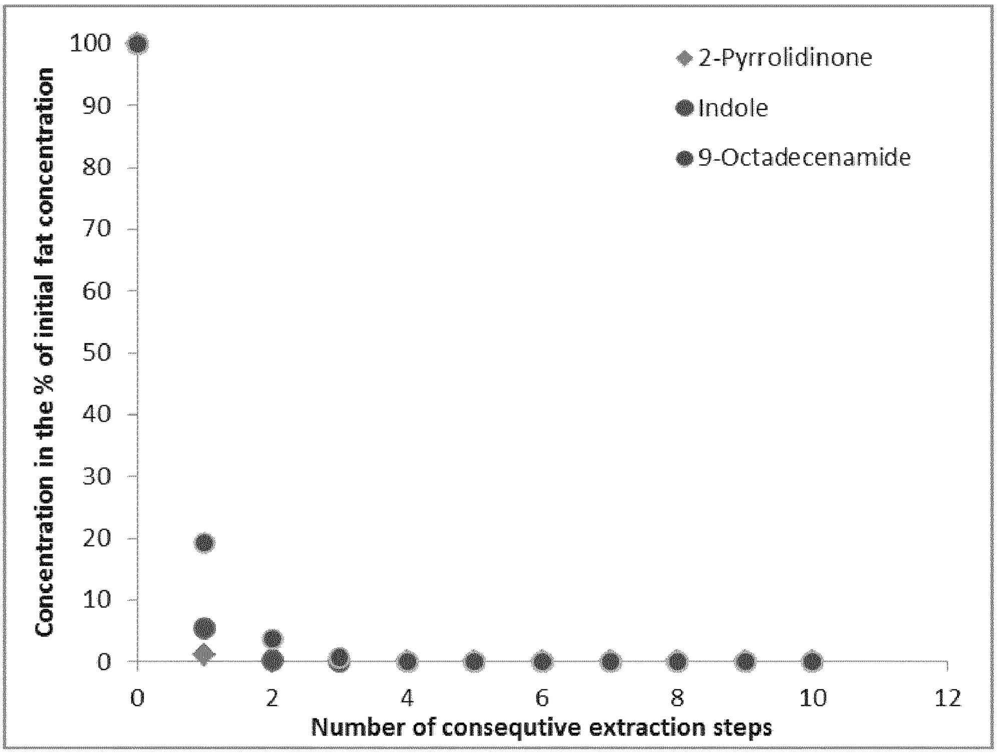
100
90
80
70
60
50
40
30
20
10
0
0
2
4
6
8
10
12
Concentration in the % of initial fat concentration
Number of consequtive extraction steps
2-Pyrrolidinone
Indole
9-Octadecenamide

**Fig 5**

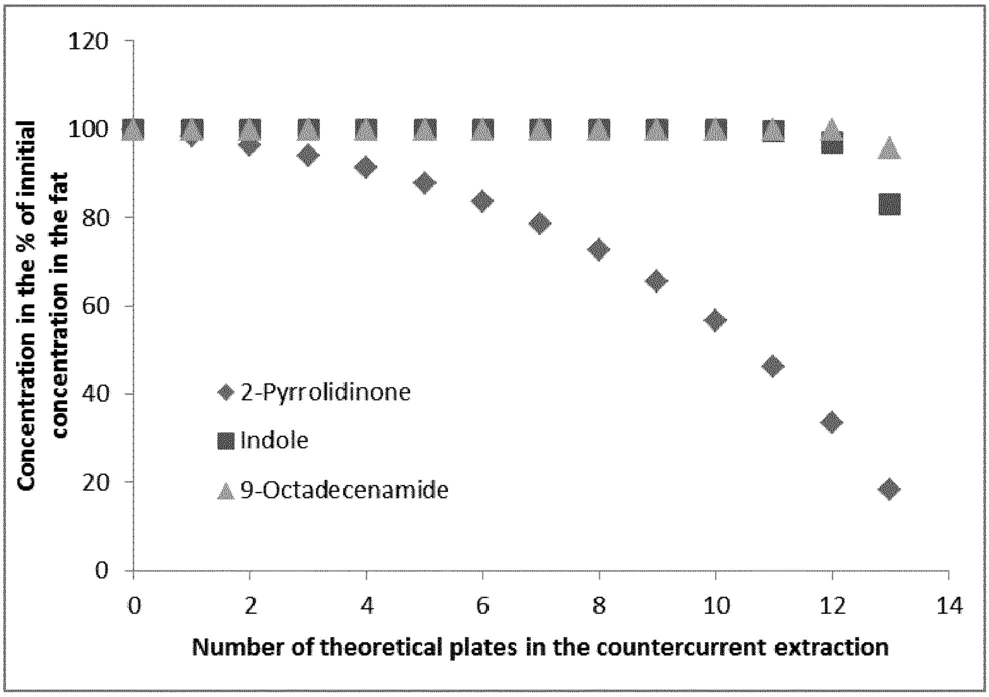
120
100
80
60
40
20
0
0
2
4
6
8
10
12
14
Concentration in the % of innitial concentration in the fat
Number of theoretical plates in the countercurrent extraction
2-Pyrrolidinone
Indole
9-Octadecenamide

**Fig 6**

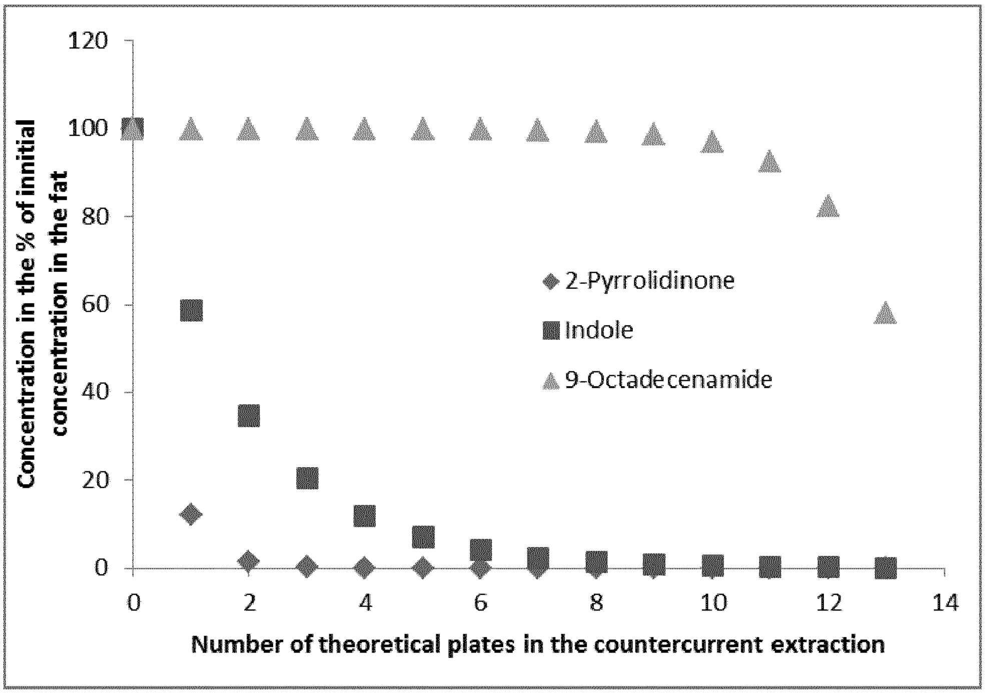
Concentration in the % of innitial concentration in the fat
120
100
80
60
40
20
0
0
2
4
6
8
10
12
14
Number of theoretical plates in the countercurrent extraction
2-Pyrrolidinone
Indole
9-Octadecenamide

Fig 7

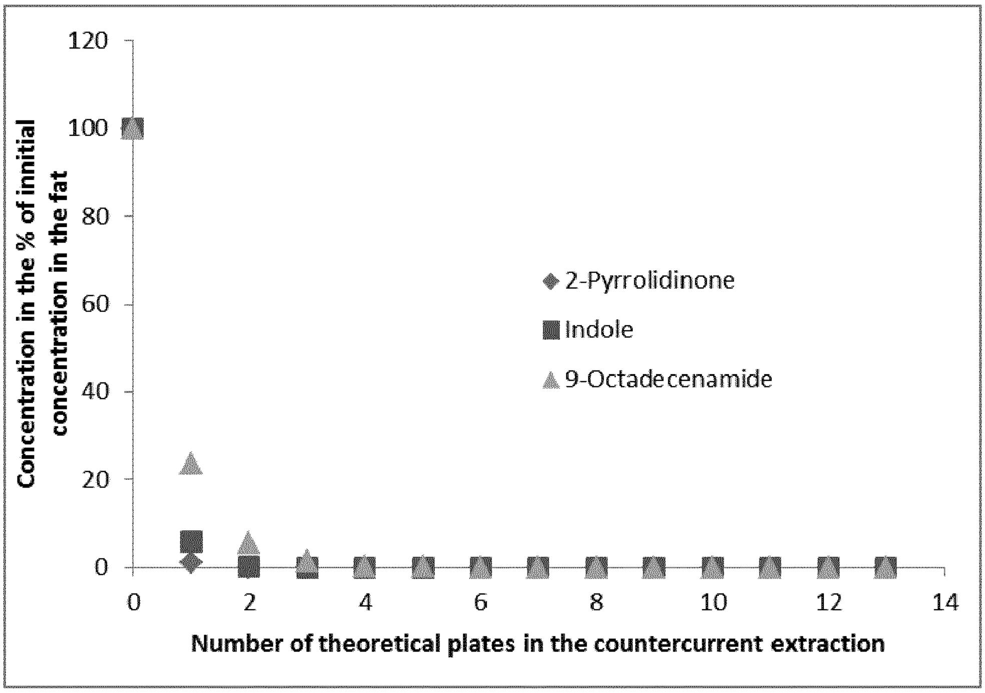
Concentration in the % of innitial concentration in the fat
120
100
80
60
40
20
0
0
2
4
6
8
10
12
14
Number of theoretical plates in the countercurrent extraction
2-Pyrrolidinone
Indole
9-Octadecenamide

Fig 8

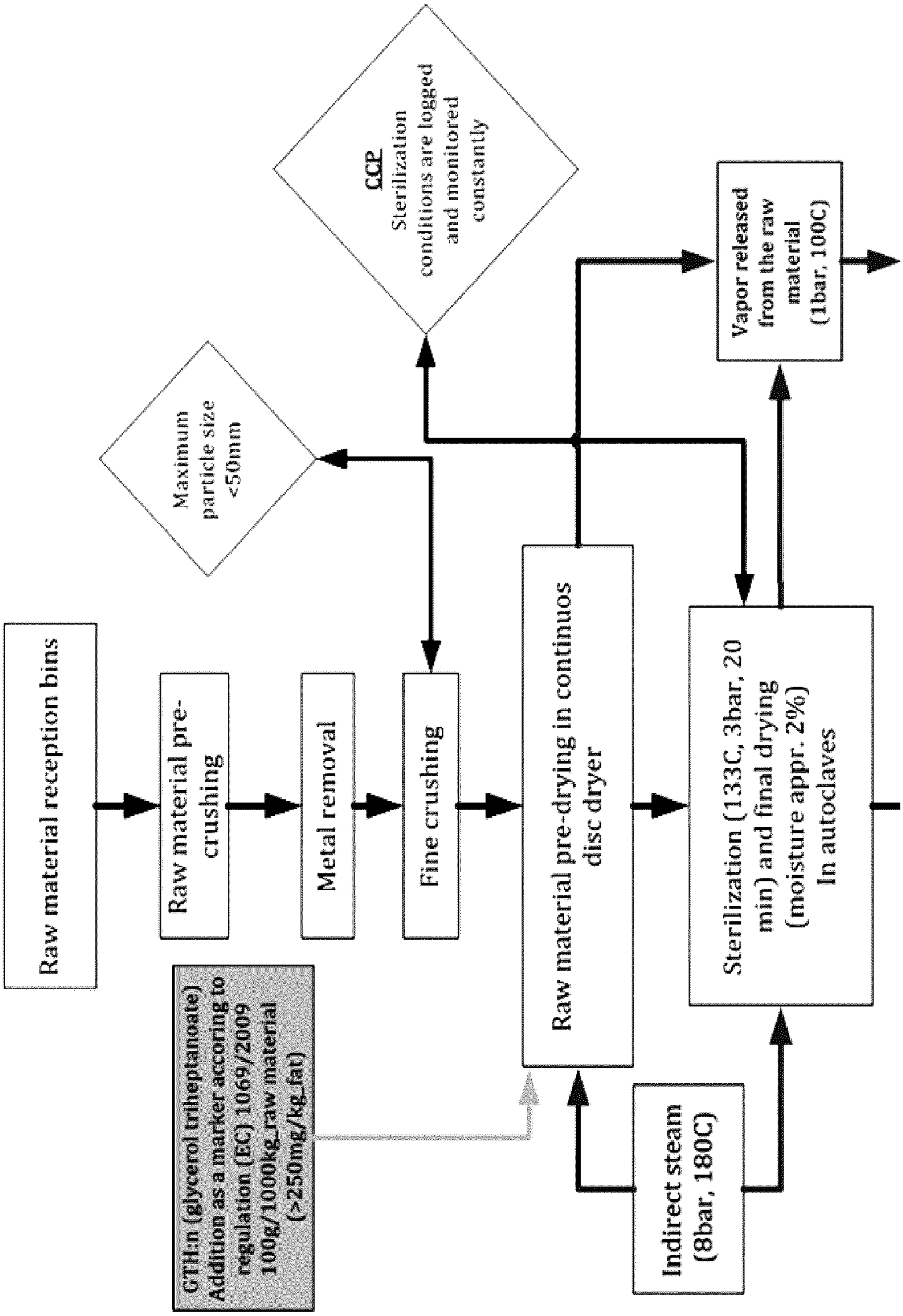
Raw material reception bins
Raw material pre-crushing
Metal removal
Fine crushing
Maximum particle size <50mm
GTH:n (glycerol triheptanoate) Addition as a marker accoring to regulation (EC) 1069/2009 100g/1000kg_raw material (>250mg/kg_fat)
Raw material pre-drying in continuos disc dryer
CCP
Sterilization conditions are logged and monitored constantly
Sterilization (133C, 3bar, 20 min) and final drying (moisture appr. 2%) In autoclaves
Vapor released from the raw material (1bar, 100C)
Indirect steam (8bar, 180C)

Fig 9/1

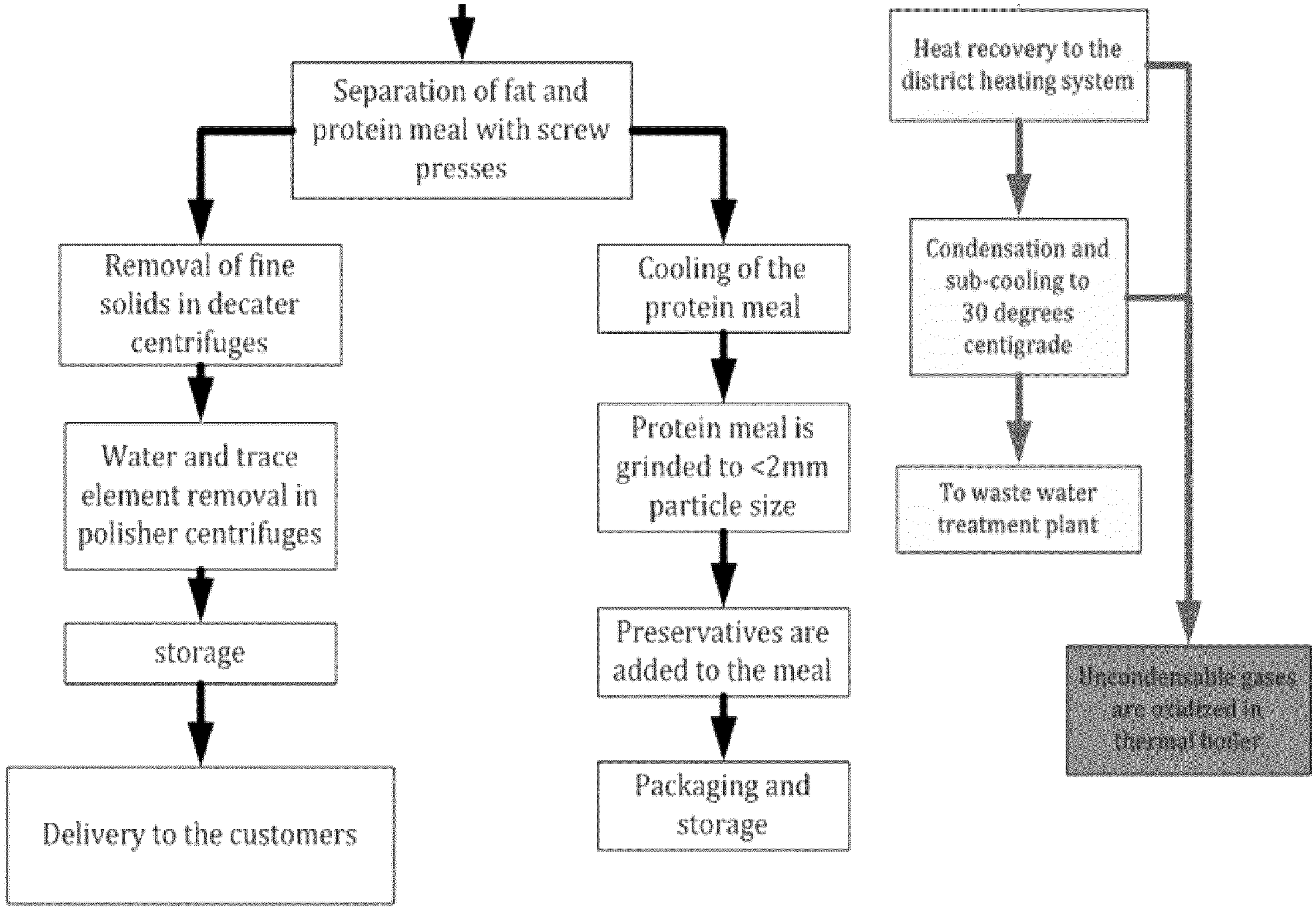
Separation of fat and protein meal with screw presses
Removal of fine solids in decater centrifuges
Water and trace element removal in polisher centrifuges
storage
Delivery to the customers
Cooling of the protein meal
Protein meal is grinded to <2mm particle size
Preservatives are added to the meal
Packaging and storage
Heat recovery to the district heating system
Condensation and sub-cooling to 30 degrees centigrade
To waste water treatment plant
Uncondensable gases are oxidized in thermal boiler

Fig 9/2

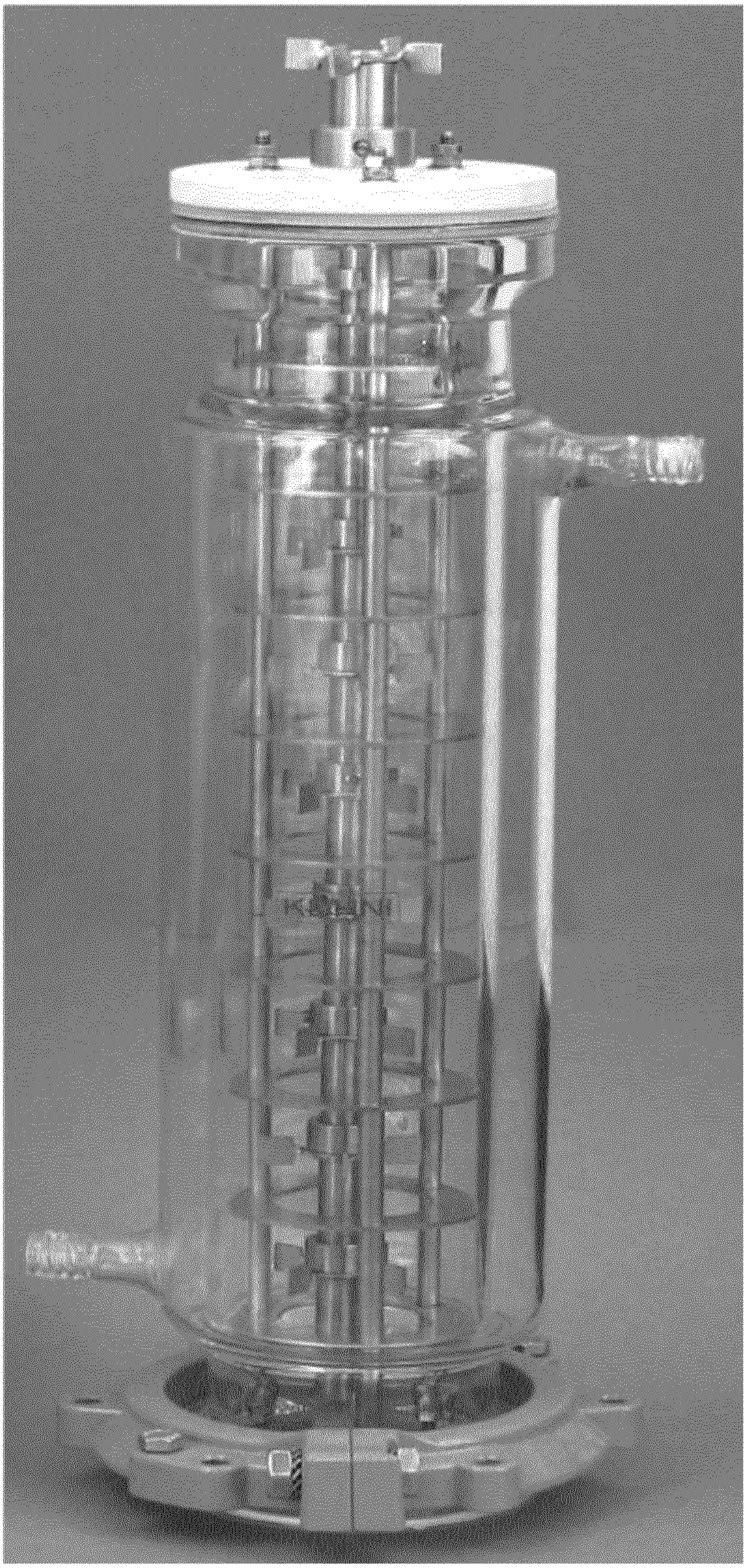

Fig 10

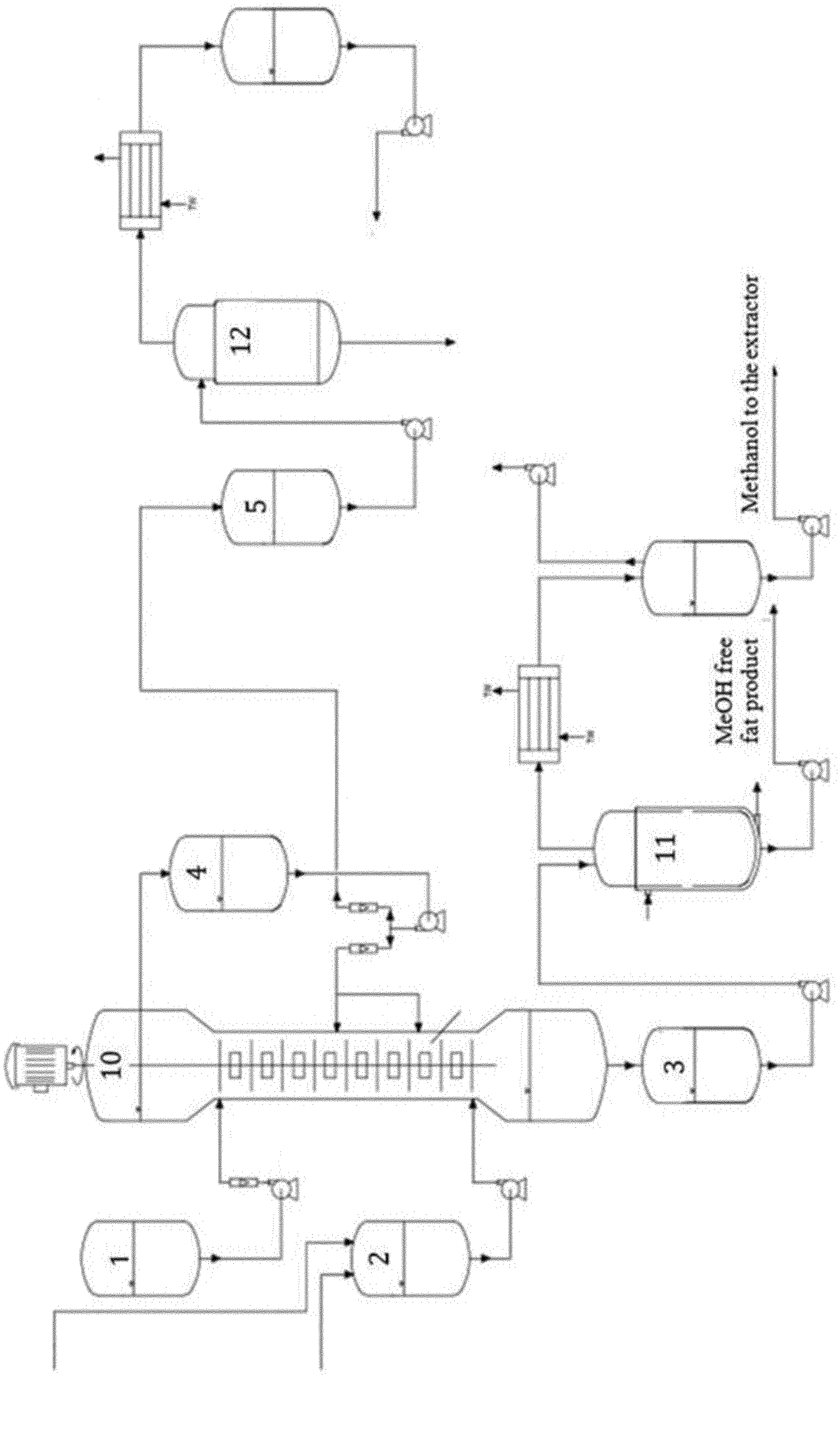
1
2
3
4
5
10
11
12
MeOH free fat product
Methanol to the extractor

Fig 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5855768 A
- EP 900837 B1
- US 20050109676 A1
- US 20080034646 A1
- US 20130236938 A1
- US 20090300971 A1
- US 20080163543 A1
- WO 2008130974 A2


### Non-patent literature cited in the description


- BIOdiesel Tech Notes. Tech Notes Newsletter. Department of Biological and Agricultural Engineering at the University of Idaho, 05 June 2005, vol. 2, 1-2
- **MCCORMICK RL et al.** Impact of biodiesel source material and chemical structure on emissions of criteria pollutants from a heavy-duty engine. *Environmental Science & Technology,* 2001, vol. 35 (9), 1742-7
- **SHARMA H.** Animal fat-Processing and Its Quality Control. *J Food Process Technol,* 2013, vol. 4, 8
- Office of Air Quality Planning And Standards Office Of Air And Radiation US EPA Research Triangle Park. USA the AP42. January 1995
- **CRAIG, L. C.** *J. Biol. Chem.,* 1944, vol. 155, 519-534
- **FRIESEN JB et al.** Countercurrent Separation of Natural Products: An Update. *J. Nat. Prod.,* 2015, vol. 78, 1765-1796
- **RAUBER J.** *Design Practice for Packed Liquid Liquid Extraction Columns 2006 AIChE Annual Meeting San Francisco*